# EUROPEAN PATENT APPLICATION

(11) **EP 4 770 185 A1**
(43) Date of publication of application: **01.07.2026**
(21) Application number: 23959879.0
(22) Date of filing: 30.11.2023
(51) Int. Cl.: H04W 28/02

(54) **WIRELESS COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN)
(74) Representative: Taor, Simon Edward William
(86) International application number: PCT/CN2023/135610
(87) International publication number: WO 2025/111965

(57) **Abstract**

Provided are wireless communication methods and communication devices. A method comprises: a first device sends a first frame to a second device, the first frame comprising one or more of the following: first information, used for indicating whether to allow out-of-order transmission of data units in a first service flow; second information, used for indicating QoS features of the first service flow allowing out-of-order transmission and/or out-of-order transmission parameters allowed by the first service flow; third information, used for indicating a first TID and/or first user priority corresponding to the data units in the first service flow; and fourth information, used for indicating a transmission direction of the first service flow.

## Description

### TECHNICAL FIELD

The present application relates to the technical field of communication, and in particular to a method for radio communication and a communication device.

### BACKGROUND

In order to solve the head-of-line blocking issue caused by in-order delivery, out-of-order delivery solution is introduced in the related technology. However, there is currently no suitable solution for how the communicating parties should specifically perform out-of-order delivery.

### SUMMARY

The present application provides a method for radio communication and a communication device. Various aspects of the present application are described below.

According to a first aspect, there is provided a method for radio communication. The method includes: a first device sends a first frame to a second device, the first frame includes one or more of: first information for indicating whether it is allowed to perform out-of-order delivery for data units in the first traffic flow; second information for indicating quality of service (QoS) characteristic(s) of the first traffic flow that allows out-of-order delivery and/or out-of-order delivery parameter(s) allowed by the first traffic flow; third information for indicating a first traffic identifier (TID) and/or a first user priority corresponding to data units in the first traffic flow; or fourth information for indicating a transmission direction of the first traffic flow.

According to a second aspect, there is provided a method for radio communication. The method includes: a second device receives a first frame sent by a first device, the first frame includes one or more of: first information for indicating whether it is allowed to perform out-of-order delivery for data units in the first traffic flow; second information for indicating quality of service (QoS) characteristic(s) of the first traffic flow that allows out-of-order delivery and/or out-of-order delivery parameter(s) allowed by the first traffic flow; third information for indicating a first traffic identifier (TID) and/or a first user priority corresponding to data units in the first traffic flow; or fourth information for indicating a transmission direction of the first traffic flow.

According to a third aspect, there is provided a communication device, the communication device is a first device, and the communication device includes a first communication module configured to send a first frame to a second device. The first frame includes one or more of: first information for indicating whether it is allowed to perform out-of-order delivery for data units in the first traffic flow; second information for indicating quality of service (QoS) characteristic(s) of the first traffic flow that allows out-of-order delivery and/or out-of-order delivery parameter(s) allowed by the first traffic flow; third information for indicating a first traffic identifier (TID) and/or a first user priority corresponding to data units in the first traffic flow; or fourth information for indicating a transmission direction of the first traffic flow.

According to a fourth aspect, there is provided a communication device, the communication device is a second device, and the communication device includes a first communication module configured to receive a first frame sent by the first device. The first frame includes one or more of: first information for indicating whether it is allowed to perform out-of-order delivery for data units in the first traffic flow; second information for indicating quality of service (QoS) characteristic(s) of the first traffic flow that allows out-of-order delivery and/or out-of-order delivery parameter(s) allowed by the first traffic flow; third information for indicating a first traffic identifier (TID) and/or a first user priority corresponding to data units in the first traffic flow; or fourth information for indicating a transmission direction of the first traffic flow.

According to a fifth aspect, there is provided a communication device, which includes a processor and a memory. The memory is configured to store one or more computer programs and the processor is configured to invoke and execute the computer program(s) stored in the memory to perform some or all steps of the method of any aspects described above.

According to a sixth aspect, an embodiment of the present application provides a communication system, which includes the above described communication device. In another possible design, the communication system may further include other devices that interact with the communication device in the methods provided by the embodiments of the present application.

According to a seventh aspect, a computer-readable storage medium provided by an embodiment of the present application is configured to store a computer program. The computer program causes a communication device to perform some or all of the steps of the methods of the above aspects.

According to an eighth aspect, an embodiment of the present application provides a computer program product. The computer program product includes a non-transitory computer-readable storage medium storing a computer program operable to cause a communication device to perform some or all of the steps of the methods of the above aspects. In some implementations, the computer program product may be a software installation package.

According to a ninth aspect, an embodiment of the present application provides a chip including a memory and a processor, and the processor can invoke and run a computer program from the memory to implement some or all of the steps described in the methods of the above aspects.

Embodiments of the present application define out-of-order delivery related information, and the out-of-order delivery related information may indicate whether out-of-order delivery is allowed and/or out-of-order delivery parameter(s). The introduction of information related to out-of-order delivery helps both communication parties to clarify the out-of-order delivery mode, thus ensuring the effective application of out-of-order delivery in practice.

### BRIEF DESCRIPTION OF THE DRAWINGS

Fig. 1 is a schematic diagram of a radio communication system applicable to an embodiment of the present application.
FIG. 2 is an example diagram of an out-of-order delivery method.
FIG. 3 is another example diagram of an out-of-order delivery method.
FIG. 4 is a schematic format diagram of an extended QoS characteristic element field according to an embodiment of the present application.
FIG. 5 is a schematic diagram of the format of the control information field in FIG. 4.
FIG. 6 is a schematic format diagram of a stream classification service (SCS) descriptor element field provided by an embodiment of the present application.
Fig. 7 is a flow chart of a method for radio communication according to an embodiment of the present application.
Fig. 8 is a schematic diagram of a communication device according to an embodiment of the present application.
Fig. 9 is a schematic structure diagram of a communication device according to another embodiment of the present application.
Fig. 10 is a schematic diagram of an apparatus applicable to an embodiment of the present application.

### DETAILED DESCRIPTION

Hereinafter, technical solutions in the present application will be described with reference to the accompanying drawings.

### Communication system

The technical solutions of the embodiments of the present application can be applied to various communication systems, such as wireless local area networks (WLAN), wireless fidelity (WiFi), or other communication systems, etc.

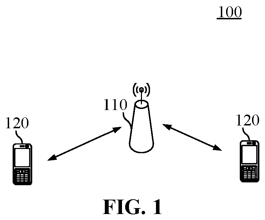

Fig. 1 is a schematic diagram of a radio communication system applicable to an embodiment of the present application. The wireless communication system 100 may include an access point 110, and a station (STA) 120 that accesses the network through the access point (AP) 110.

In some scenarios, the AP may also be referred to as an AP STA, that is, the AP is also a STA in a sense.

In some scenarios, the STA may also be referred to as a non-AP STA.

Communication in the communication system 100 may be communication between an AP and a STA, communication between a STA and a STA, or communication between a STA and a peer STA. The peer station may refer to a device that communicates with the opposite end of the STA, for example, a peer station may be an AP or a STA.

AP is equivalent to the bridge between wired network and wireless network. Its main function is to connect various wireless network clients together, and then connect the wireless network to Ethernet. The AP device may be a terminal device with a WiFi chip (such as a mobile phone) or a network device (such as a router).

It should be understood that the roles of various communication devices in the communication system 100 are not absolute. Taking mobile phone as an example, in a scenario where a mobile phone connects to a router, the mobile phone may be a STA. In a scenario where the mobile phone serves as a hotspot for other mobile phones, the mobile phone acts as an AP.

The AP and the STA may be devices used in the Internet of Vehicles, internet of things (IoT) nodes, sensors, and the like, in IoT, smart cameras, smart remote controllers, smart water meters, and the like, in smart homes, and sensors in smart cities.

In some embodiments, both the STA and the AP may support the 802.11be standard. The STA or AP may be a device supporting various current and future 802.11 family WLAN standards, such as 802.11ax, 802.11ac, 802.11n, 802.11g, 802.11b, and 802.11a.

There are one or more links between the STA and the AP. In some embodiments, the STA and AP support multi-band communication. For example, the STA and AP may communicate simultaneously on the 2.4 GHz, 5 GHz, 6 GHz, 45 GHz, and 60 GHz frequency bands, or simultaneously on different channels in the same frequency band (or different frequency bands) to improve communication throughput and/or reliability between devices. Accordingly, this kind of device may also be referred to as a multi-band device, or as a multi-link device (MLD). Sometimes it may also be referred to as a multi-link entity or a multi-band entity. The multi-link device may be an AP device or a STA device. If the multi-link device is an AP device, the multi-link device may include one or more APs. If the multi-link device is a STA device, the multi-link device may include one or more non-AP STAs.

A multi-link device comprising one or more APs may be referred to as an access point multi-link device (AP MLD), and a multi-link device comprising one or more non-AP STAs may be referred to as a non-AP multi-link device (non-AP MLD).

In an embodiment of the present application, the AP may include a plurality of APs, and the non-AP STA may include a plurality of STAs. A plurality of links may be formed between the plurality of APs and the plurality of STAs, and data communication may be performed between the plurality of APs and the plurality of STAs through corresponding links.

In the embodiments of the present application, a STA may be a mobile phone, a pad, a laptop, a handheld computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, and the like that supports WLAN/WiFi technologies.

The frequency bands that can be supported by WLAN technology may include, but are not limited to, low frequency bands (e.g., 2.4 GHz, 5 GHz, 6 GHz), and high frequency bands (e.g., 45 GHz, 60 GHz).

FIG. 1 exemplarily illustrates one AP and two STAs. The communication system 100 may also include multiple APs, and other numbers of STAs, which are not limited by the embodiments of the present application. In FIG. 1, the AP, the STA 120a, and the STA 120b may be located in the same basic service set (BSS). The AP may be interrelated with the STA 120a. The AP may be interrelated with the STA 120b.

It should be understood that, in the embodiments of the present application, a device having a communication function in the network/system may be referred to as a communication device. Taking the communication system 100 illustrated in FIG. 1 as an example, the communication device may include an AP 110 and a STA 120 having communication functions. In addition, the communication device mentioned in the embodiment of the present application may also include other devices in the communication system 100, such as other network entities (not shown in FIG. 1) such as a network controller and a gateway, and this is not limited in the embodiment of the present application.

APs and STAs can be deployed on land, including indoor or outdoor, handheld or vehicle-mounted. They can also be deployed on the water. They can also be deployed on aircraft, balloons and satellites in the air. In the embodiments of the present application, the scenario of the AP and/or STA is not limited.

It should be understood that all or part of the functionality of the communication device in the present application may also be implemented by software functionality running on hardware, or implemented by virtualization functionality on a platform (such as a cloud platform).

With the rise of extended reality (XR) devices, the business demand for bursty low-latency traffic has increased. For bursty low-latency traffic of uplink (UL) or downlink (DL), related services need to obtain transmission resources as soon as possible to complete data transmission. It is assumed that the holder of current transmission resource is a non-AP STA, if the AP or other non-AP STAs in the same BSS generate bursty low-latency traffic, these devices may not be able to obtain transmission resources in time, thereby causing a large delay impact on the bursty low-latency traffic service. In response to this problem, some solutions provided by related technologies are introduced below.

### SCS Process

In the SCS process, the non-AP MLD may send an SCS request frame to the AP MLD to request the AP MLD to classify incoming individual addressed medium access control (MAC) service data unit (MSDU) according to parameters provided by the non-AP MLD and/or to describe its flow characteristics to the AP MLD.

If the request type field in the SCS request frame is set to "Add" or "Change", the SCS request frame may contain an SCS Descriptor element, and the SCS Descriptor element may contain a QoS characteristics element. The QoS characteristic element may be used to describe traffic characteristics of the SCS flow requested by the SCS request frame.

The MLD may maintain an SCS identity (SCSID) for each non-AP MLD at the MLD level. That is, the SCSID used by the non-AP STA affiliated with the non-AP MLD in the SCS request frame transmitted to the AP affiliated with the AP MLD is unique among all STAs affiliated with the non-AP MLD. The SCSID is used for non-AP MLD requests to create, modify, or delete an SCS stream. The SCSID is used by the AP MLD to identify the SCS flow.

If the SCS descriptor element contains a QoS characteristic element, and the direction field in the QoS characteristic element indicates downlink, the CS descriptor element should contain a traffic classification (TCLAS) element (TCLAS Element) field, and may contain a TCLAS processing element field. If the SCS descriptor element field includes a TCLAS element field and a TCLAS processing element field, the above fields describe the stream classification that the non-AP STA requests the AP to apply to the corresponding stream.

### In-order delivery mechanism provided by Wi-Fi MAC

The MAC data service of Wi-Fi provides a peer logical link control (LLC) sublayer entity or an institute of electrical and electronics engineers (IEEE) 802.1Q bridge port with the ability to switch MSDUs. To support this service, the local MAC uses the underlying physical layer service to transmit the MSDU to the peer MAC entity, and transfers the MSDU to the peer LLC sublayer or IEEE 802.1Q bridge port through the peer MAC entity. This asynchronous MSDU transfer is performed on a connectionless basis. By default, MSDU transmission is based on best effort. However, the QoS facility uses a traffic identifier (TID) to specify different services on a per-MSDU basis.

The STA may maintain one or more serial number (SN) spaces for determining the SN of the frame when the frame is transmitted. When multiple SN spaces are supported, the appropriate SN space is determined by the information of the MAC control field of the frame to be transmitted. For each MSDU or aggregate MSDU (A-MSDU) or MAC management PDU (MMPDU) transmitted based on the SN space, the SN space may be represented by an SN counter, and the value of the counter starts from 0 and increments by 1.

The MLD may maintain one or more SN spaces. The SN space may contain one counter or multiple counters. MPDUs belonging to the same MSDU or A-MSDU should have the same SN. Different MSDUs, A-MSDUs or MMPDUs (most likely) have different SNs.

### Robust security network association (RSNA) confidentiality and integrity protocol

The Wi-Fi standard defines the following RSNA confidentiality and integrity protocols: Counter Mode (CTR) with cipher-block chaining message authentication code (CBC-MAC) protocol (CTR with CBC-MAC protocol, CCMP) and galois/counter mode protocol (GCMP).

CCMP provides data confidentiality, authentication, integrity, and replay protection. CCMP is a CCM based on the advanced encryption standard (AES) encryption algorithm. CCM combines CTR for data confidentiality and CBC-MAC for verification and integrity. The CCM protects the integrity of MPDU data fields and the selected portions of IEEE 802.11 MPDU headers. CCM is a general mode that can be used for any block-oriented encryption algorithm. CCM requires a new temporary key for each session. CCM also requires each frame protected by a given temporary key to have a unique nonce value. Reusing a random value with the same temporary key may make all security guarantees invalid.

For a secure protocol version 0 (PV0) MPDU, CCMP encrypts the frame body field of the plaintext MPDU and encapsulates it to generate ciphertext. By incrementing the packet number (PN), a new non-zero PN is obtained for each MPDU, so that the PN will not repeat for the same temporary key.

Number each MPDU in turn to obtain the PN value corresponding to each MPDU. Each sending STA that is not affiliated with the MLD shall maintain a single PN (48-bit counter) for each pairwise transient key security association (PTKSA) and group temporary key security association (GTKSA). Each sending STA that is affiliated with the MLD shall use the PN (48-bit counter) maintained by the MLD for the PTKSA, or the PN maintained by the STA for the GTKSA. PN should be implemented as a 48-bit strictly incrementing integer that initializes to 0 when the corresponding temporary key is initialized or refreshed (via key update).

The PN value of each MPDU is incremented by a positive number. For MPDUs consisting of fragmented MSDU, A-MSDU, and MMPDU, PN shall be incremented with a stride of 1. For a PV0 MPDU, the PN of a series of encrypted MPDUs using the same temporary key is not duplicated. For a protocol version 1 (PV1) MPDU, the PN of a series of encrypted MPDUs using the same temporary key and partial TID (PTID) will not be repeated.

When the PN space is exhausted (i.e., the PN exceeds the lowest PN exhaustion threshold or the highest PN exhaustion threshold), the corresponding key may be replaced or the communication may be terminated. If an individually addressed MPDU is sent by an MLD through an affiliated STA to a receiving MLD, a single PN space shall be reserved for the PTKSA for transmission through all affiliated STAs.

The recipient shall discard any data frame whose received PN is less than or equal to the target value (the value of the replay counter associated with the transmitter address (TA), the receiver address (RA), and the priority value of the received MPDU). If the MPDU is an individually addressed data frame transmitted through the affiliated STA between the AP MLD and the non-AP MLD associated with the AP MLD, the recipient shall discard any data frame received whose PN is less than or equal to the target value (the value of the replay counter associated with the sending MLD MAC address, the receiving MLD MAC address (personal or group address), and the priority value of the receiving MPDU).

For the individually addressed MPDU received by the affiliated STA from the sending MLD, the receiving MLD shall maintain a set of replay counters of the PTKSA for all affiliated STAs.

### Out-of-order delivery scheme

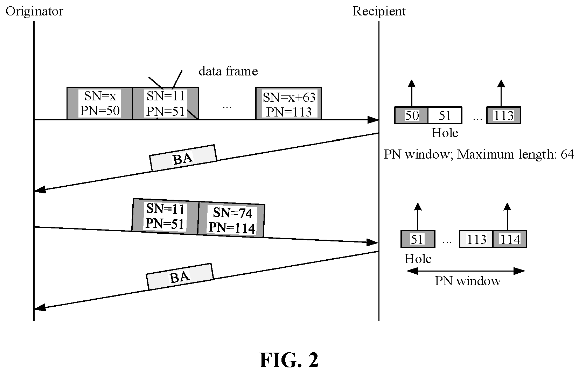

In UHR proposal IEEE 802.11-23/697 r0, Intel mentions the head of line blocking issue of WiFi, and proposes to allow a MAC-service access point (SAP) to deliver out-of-order data packets optionally for specific TID(s). The number of specific TID(s) may be limited to 1 or 2, and the specific TID(s) may be limited to use only when a flow that can benefit from out-of-order delivery is established (e.g., following a corresponding SCS negotiation). At the same time, a PN space used by a frame requiring out-of-order delivery and a frame requiring in-order delivery is distinguished. An example of an out-of-order delivery process is shown in Figure 2. As shown in FIG. 2, although at the beginning the receiver cannot successfully receive the MPDU with the SN being 11 and the PN being 51, it still transfers the received MPDU (such as the MPDU with the PN being 50 or 113) to the next MAC process for replay detection; next, after receiving the MPDU with the PN being 51, it is transferred to the next MAC process together with the later received MPDU.

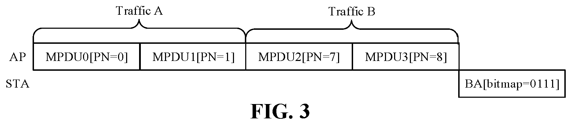

MediaTek proposed an independent PN sequence and replay counter for low-latency packets in UHR proposal IEEE 802.11-23/0799r0 to facilitate earlier processing of low-latency packets while continuing to support replay detection of other packets in the same TID. As shown in FIG. 3, traffic A and traffic B use different PN sequences, and traffic A and traffic B use different replay counters. Although MPDU0 is not successfully received, the STA may still transmit MPDU2 and MPDU3 to the upper layer.

The restriction of WiFi MAC transmitting data units in sequence can lead to head-of-line blocking issue. That is, a packet held in the reorder buffer will not be forwarded up if there is a hole (i.e. there are unreceived packets with earlier SNs). The sender needs to send packets with lower SN before it can send packets with higher SN. Therefore, data packets with low latency transmission requirements can't be transmitted quickly due to head-of-line blocking, resulting in the transmission of data packets failing to meet QoS requirements.

Therefore, the problem of head-of-line blocking can be solved by introducing out-of-order delivery mechanism in specific scenarios (such as scenarios where multiple traffic flows are mapped to one TID, or scenarios where layer 2 and layer 3 protocols coordinate to handle low-latency flow transmission). However, there is currently no suitable scheme on how to carry out out-of-order delivery. For example, in order to ensure that the out-of-order delivery mechanism is effectively applied to the transmission of a low-latency flow, the data sender and the receiver corresponding to the service flow need to determine in advance whether to adopt the out-of-order delivery mechanism and/or related out-of-order delivery parameters. The schemes proposed in IEEE 802.11-23/697r0 and IEEE 802.11-23/0799r0 do not involve how the data sender and receiver negotiate to determine whether to adopt the out-of-order delivery mechanism and/or related out-of-order delivery parameters.

In view of the above problems, the embodiment of the present application defines information related to out-of-order delivery. The information related to the out-of-order delivery may be used to negotiate (or request) whether to adopt the out-of-order delivery and/or related out-of-order delivery parameters. The introduction of information related to out-of-order delivery helps both parties to clarify the out-of-order delivery mode, thus ensuring the effective application of out-of-order delivery in practice.

The information related to out-of-order delivery will be described in detail below.

### First information for indicating whether out-of-order delivery is allowed for data units in the first traffic flow

It should be noted that the traffic flow, the data flow and the QoS flow mentioned in the embodiments of the present application can be used interchangeably in the case of no conflict. In some implementations, the traffic flow mentioned in the embodiments of the present application may refer to an SCS stream. The traffic flow mentioned in the embodiments of the present application may refer to a traffic flow in a specific transmission direction. For example, the traffic flow mentioned in the embodiments of the present application may refer to a traffic flow in an uplink direction, a traffic flow in a downlink direction, or a traffic flow on a direct link.

It also should be noted that, the data unit mentioned in the embodiments of the present application may refer to, for example, a combination of one or more of a data frame, an MSDU, an A-MSDU, an MPDU, and the like.

The first information is used to indicate whether out-of-order delivery is allowed for data units in the first traffic flow. The out-of-order deliver mentioned herein may mean that there may be a difference between the time sequence in which the sending end sends data units at the MAC SAP and the time sequence in which the receiving end receives data units at the MAC SAP. For example, if the sending end sequentially sends the data unit 0 and the data unit 1 at the MAC SAP, and the receiving end sequentially receives the data unit 1 and the data unit 0 at the MAC SAP, the transmission of the data unit 0 and the data unit 1 can be regarded as an out-of-order delivery because the receiving end first receives the data unit 1 in the lower sending order.

The first information may have one or more values. For example, if the value of the first information is a first value (such as 0), it means that out-of-order delivery for data units in the first traffic flow is not allowed. For another example, if the value of the first information is a second value (such as 1), it means that out-of-order delivery for data units in the first traffic flow is allowed.

### Second information for indicating QoS characteristic(s) of the first traffic flow for which out-of-order delivery is allowed and/or out-of-order delivery parameter(s) allowed by the first traffic flow

In some implementations, the second information indicates flow characteristic(s), QoS characteristic(s), or a QoS expectation of a first traffic flow that allows out-of-order delivery.

In some implementations, the second information indicates out-of-order delivery parameter(s) and/or an out-of-order degree allowed by the first traffic flow.

The second information may be related to a "hole" generated when the first traffic flow is transmitted out of order. When the receiving end has received the data unit of a lower sending order, the data unit(s) in a higher sending order that the receiving end has not received forms a hole. The hole is caused by the presence of out-of-order delivery, and thus, the hole mentioned in the embodiments of the present application may also be referred to as out-of-order hole. A hole in the first traffic flow may correspond to "target data unit" in the first traffic flow. The target data unit referred to herein is a data unit or a plurality of consecutive data units (the "consecutive" mentioned here refers to consecutive in sending order or sending time) that are expected to be received but is not received (by the receiving end of the first traffic flow), and the sending order of the target data unit (at the sending end of the first traffic flow) precedes the received data unit(s) in the first traffic flow. In other words, in a case that the receiving end receives one or some data units, one data unit (e.g., MSDU or A-MSDU), whose transmission order precedes the received data unit(s), that the receiving end expects to receive but not receive, or a plurality of consecutive data units (the "consecutive" mentioned here refers to consecutive in sending order or sending time), whose transmission order precedes the received data unit(s), that the receiving end expects to receive but not receive is referred to as a hole.

In some implementations, the second information may relate to a size (or magnitude) of the hole in the first traffic flow. As mentioned above, the hole corresponds to the target data unit in the first traffic flow. The size of a hole may refer to the number of data unit(s) contained by the target data unit. For example, if the target data unit corresponding to one hole includes only one data unit, the size of the hole may be 1. For another example, if the target data unit corresponding to one hole includes N consecutive data units, the size of the hole may be N. For example, for one hole, assuming that the earliest data unit among the data units that are currently expected received but not received is MSDU-n, and assuming that among the currently received data units, a data unit whose sending time is not earlier than MSDU-n and which is closest to MSDU-n in sending order is MSDU-m, then the size of the hole may be determined based on the number of the data units that are not received between MSDU-n and MSDU-m (when calculating the number of the data units that are not received between MSDU-n and MSDU-m, MSDU-n shall be counted). When the SNs corresponding to the data units are consecutively incremented by 1 in the sending order, if the SN of the MSDU-n is SN (n) and the SN of the MSDU-m is SN (m), the size of the hole is SN (m)-SN (n).

For example, the second information may be used to indicate the allowed maximum size of one hole. That is, the second information indicates the maximum value of the hole size allowed in the first traffic flow. The maximum size of a hole can be represented by an unsigned integer.

In some implementations, the second information may relate to the number of holes allowed within the first period. The first period mentioned herein may be set according to actual needs. For example, the first period may be a given service period (SP), a given time window, or a duration period.

For example, the second information indicates an maximum number of holes allowed within the first period. That is, the second information indicates a maximum value of the number of holes allowed in the first traffic flow within the first period. The maximum number of holes allowed in the first period may be represented by an unsigned integer.

In some implementations, the second information may relate to the interval between two adjacent holes (or two consecutive holes) (i.e., the number of data units contained between two adjacent holes). Assuming that the two adjacent holes include a first hole and a second hole, the interval between the two adjacent holes may be determined based on the number of data units between the corresponding earliest data unit in the first hole (i.e., the data unit with the earliest sending order among the data units that are expected received but not received in the first hole) and the corresponding earliest data unit in the second hole (i.e., the data unit with the earliest sending order among the data units that are expected received but not received in the second hole). Of course, the interval between two adjacent holes may also be determined based on the number of data units between the corresponding latest data unit in the first hole (i.e. the data unit with the latest sending order among the data units that are expected received but not received in the first hole) and the corresponding earliest data unit in the second hole (i.e., the data unit with the earliest sending order among the data units that are expected received but not received in the second hole). Alternatively, the interval between two adjacent holes may also be determined based on the number of data units between the corresponding latest data unit in the first hole (i.e. the data unit with the latest sending order among the data units that are expected received but not received in the first hole) and the corresponding latest data unit in the second hole (i.e., the data unit with the latest sending order among the data units that are expected received but not received in the second hole).

For example, the second information may indicate a minimum interval allowed between two adjacent holes. That is, the second information indicates the minimum value of the number of data units allowed to be spaced between two adjacent holes. The minimum interval may be the minimum interval within a given service period (or during a given time window or duration). The minimum interval may be represented by an unsigned integer.

As another example, the second information may indicate a maximum interval allowed between two adjacent holes. That is, the second information indicates the maximum value of the number of data units allowed to be spaced between two adjacent holes. The maximum interval may be the maximum interval within a given service period (or during a given time window or duration). The maximum interval may be represented by an unsigned integer.

In some implementations, the second information may be related to a target time interval. The target time interval refers to the time interval between the time at which the hole is generated and the time at which the target data unit is expected to be received. This target time interval may also be referred to as a desired hole filling time. For example, if a received data unit is transferred to the upper layer, but at this time, there are one or more consecutive data units, that have not been received, whose sending order is before that of this data unit, the one or more consecutive data units are the aforementioned target data unit, and the existence of the target data unit creates a hole. In this case, the target time interval refers to the duration between the time at which the one or more data units generate a hole and the time at which the upper layer expects to receive the one or more consecutive data units.

For example, the second information is used to indicate an allowed maximum target time interval. The maximum time interval may be represented by an unsigned integer. The maximum time interval may be, for example, in microseconds.

### Third information for indicating the first TID and/or the first user priority corresponding to data unit(s) in the first traffic flow

The data unit(s) in the first traffic flow corresponds to the first TID and/or the first user priority, which may mean that the data unit(s) in the first traffic flow (individually addressed data unit) may be mapped to the first TID and/or the first user priority when the data unit(s) in the first traffic flow is transmitted.

In some implementations, the first TID may be a TID that allows out-of-order delivery.

In some implementations, the first TID may be a TID that does not allow out-of-order delivery.

In some implementations, the first user priority may be a user priority that allows out-of-order delivery.

In some implementations, the first user priority may be a user priority that does not allow out-of-order delivery.

In some implementations, if the first traffic flow is a traffic flow that allows out-of-order delivery, the first TID may be a TID that allows out-of-order delivery or a TID that does not allow out-of-order delivery. Further, if the first TID is a TID that allows out-of-order delivery and the SCS request is successfully accepted, the transmission of the first traffic flow needs to satisfy one or more requirements indicated by the out-of-order delivery parameter(s) (or the transmission of the first traffic flow matches the one or more requirements indicated by the out-of-order delivery parameter(s)). The out-of-order delivery parameter(s) may be defined or indicated by the second information mentioned above. For example, the out-of-order delivery parameter(s) may include one or more of the following parameters: an allowed maximum size of one hole, a maximum number of holes allowed in the first period, a minimum interval allowed between two adjacent holes, a maximum interval allowed between two adjacent holes, or an allowed maximum target time interval.

In some implementations, if the first traffic flow is a traffic flow that allows out-of-order delivery, the first user priority may be a user priority that allows out-of-order delivery or a user priority that does not allow out-of-order delivery. Further, if the first user priority is a user priority that allows out-of-order delivery, the transmission of the first service flow needs to meet the requirements of the out-of-order delivery parameter(s) (or the transmission of the first service flow matches the out-of-order transmission parameter(s)). The out-of-order delivery parameter(s) may be defined or indicated by the second information mentioned above. For example, the out-of-order delivery parameter(s) may include one or more of the following parameters: an allowed maximum size of one hole, a maximum number of holes allowed in the first period, a minimum interval allowed between two adjacent holes, a maximum interval allowed between two adjacent holes,or an allowed maximum target time interval.

In some implementations, if the first traffic flow is a traffic flow that does not allow out-of-order delivery, the first TID is a TID that does not allow out-of-order delivery.

In some implementations, if the first traffic flow is a traffic flow that does not allow out-of-order delivery, the first user priority is a user priority that does not allow out-of-order delivery.

### Fourth information for indicating the transmission direction of the first traffic flow

In some implementations, the fourth information may indicate that the transmission direction of the first traffic flow is one of an uplink, a downlink, or a direct link. Uplink refers to transmission of a data unit (such as an MSDU or A-MSDU) from a non-AP STA (or non-AP MLD) to an AP (or AP MLD). Downlink refers to transmission of a data unit (such as MSDU or A-MSDU) from an AP (or AP MLD) to a non-AP STA (or non-AP MLD). A direct link refers to transmission of a data unit (such as MSDU or A-MSDU) via a Peer-to-Peer link.

### Fifth information for indicating an in-order or out-of-order processing mode of data unit(s) (or data unit(s) corresponding to the first TID and/or the first user priority mentioned above) in the first traffic flow

In some implementations, the fifth information is used to indicate whether to distinguish the data units in the first traffic flow, i.e. whether to divide the data units in the first traffic flow into different types of data units.

In some implementations, the fifth information is used to indicate the data units in the first traffic flow are processed according to the same type of data units or whether the data units in the first traffic flow are processed according to the same type of data units.

In some implementations, the fifth information is used to indicate the data units in the first traffic flow correspond to the same SN sequence, the same SN space, or the same SN counter, or whether the data units in the first traffic flow correspond to the same SN sequence, the same SN space, or the same SN counter. One SN sequence may correspond to one SN space and/or one SN counter.

In some implementations, the fifth information is used to indicate the data units in the first traffic flow correspond to the same PN sequence, the same PN space, or the same PN counter, or whether the data units in the first traffic flow correspond to the same SN sequence, the same SN space, or the same SN counter. One PN sequence may correspond to one PN space and/or one PN counter.

In some implementations, the fifth information is used to indicate that data units in the first traffic flow are processed according to multiple types of data units, or whether data units in the first traffic flow are processed according to multiple types of data units. For example, data units in the first traffic flow may be divided into multiple types of data units, and the multiple types of data units correspond to different latency requirements (such as low latency requirement and non-low latency requirement). For another example, the data units in the first traffic flow may be divided into multiple types of data units, and the multiple types of data units correspond to different data unit tags (for example, the multiple types of data units correspond to a first tag and a second tag, and the data units corresponding to the first tag and the second tag may have different latency requirements or other requirements). As another example, the data units in the first traffic flow may be divided into multiple types of data units, and the multiple types of data units correspond to different TCLAS elements.

In some implementations, the fifth information is used to indicate data units in the first traffic flow correspond to a plurality of SN sequences, a plurality of SN spaces, or a plurality of SN counters, or whether data units in the first traffic flow correspond to a plurality of SN sequences, a plurality of SN spaces, or a plurality of SN counters. For example, data units in the first traffic flow may be divided into two types of data units (such as data units with low latency transmission requirement and data units with non-low latency transmission requirement). Different SN sequences, SN spaces, or SN counters may be allocated for both types of data units. As another example, data units in the first traffic flow may be divided into two types of data units. One type of data units correspond to one of the associated TCLAS elements, and the other type of data units correspond to other TCLAS element(s) of the associated TCLAS elements. Different SN sequences, SN spaces, or SN counters may be allocated for both types of data units. As another example, the data units in the first traffic flow may be divided into multiple types of data units, where each type of data units correspond to one of the associated TCLAS elements. For multiple types of data units, different SN sequences, SN spaces, or SN counters may be allocated to different types of data units.

In some implementations, the fifth information is used to indicate data units in the first traffic flow correspond to a plurality of PN sequences, a plurality of PN spaces, or a plurality of PN counters, or whether data units in the first traffic flow correspond to a plurality of SN sequences, a plurality of SN spaces, or a plurality of SN counters. For example, data units in the first traffic flow may be divided into two types of data units (such as data units with low latency transmission requirement and data units with non-low latency transmission requirement), and different PN sequences, PN spaces, or PN counters may be allocated for the two types of data units. As another example, data units in the first traffic flow may be divided into two types of data units, where one type of data units correspond to one of the associated TCLAS elements, and the other type of data units correspond to other TCLAS element(s) of the associated TCLAS elements. Different PN sequences, PN spaces, or PN counters may be allocated for both types of data units. As another example, data units in the first traffic flow may be divided into multiple types of data units, where each type of data units correspond to one of the associated TCLAS elements. For multiple types of data units, different PN sequences, PN spaces, or PN counters may be allocated to different types of data units.

### Sixth information for indicating whether out-of-order delivery is allowed for data units of the same type in the first service flow

The sixth information is used to indicate whether out-of-order delivery is allowed for data units of the same type in the first traffic flow. The type distinguishing method of the data units in the first traffic flow may refer to the related description of the fifth information.

The sixth information may include one or more values. For example, the sixth information may include a first value (e.g. 0) and a second value (e.g. 1). If the value of the sixth information is the first value, it indicates that out-of-order delivery is allowed for data units of the same type in the first traffic flow. If the value of the sixth information is the second value, it indicates that out-of-order delivery is not allowed for data units of the same type in the first traffic flow.

The foregoing describes in detail the out-of-order delivery related information defined in the embodiments of the present application. Hereinafter, a carrying mode of out-of-order delivery related information will be described in detail as an example.

In some implementations, a first QoS characteristic element field may be defined. The first QoS characteristic element field may include one or more of the first information to the sixth information mentioned above. The first QoS characteristic element field can be regarded as an extension of the QoS characteristic element field in the related art. Therefore, the first QoS characteristic element field is hereinafter referred to as an extended QoS characteristic element field.

The extended QoS characteristic element field may include a control information field and other fields. The first information, the third information, the fifth information, and the sixth information mentioned above may be carried in the control information field. The out-of-order delivery parameter(s) indicated by the second information may be carried in other fields.

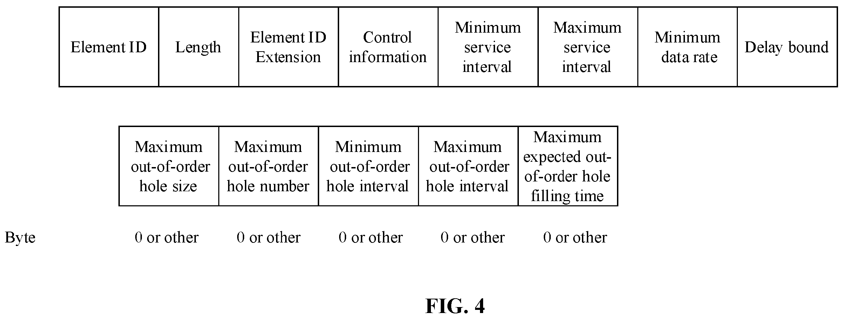

FIG. 4 is an example diagram of a format of an extended QoS characteristic element field. As illustrated in FIG. 4, the extended QoS characteristic element includes one or more of the following fields: Element ID, Length, Element ID Extension, Control information, Minimum service interval, Maximum service interval, Minimum data rate, Delay Bound, Maximum out-of-order hole, Maximum out-of-order hole number, Minimum out-of-order hole interval, Maximum out-of-order hole interval, or Maximum expected out-of-order hole filling time. The meanings of these fields are introduced separately below.

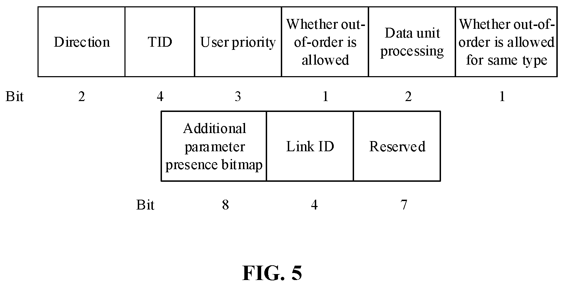

The element ID field, length field, and element ID extension field may follow the definitions in the IEEE 802.11 specification. FIG. 5 is an exemplary diagram of a control information field format. In the control information field, the direction field specifies the transmission direction of the data unit described by this element, as defined in Table 1.

**Table 1 Direction field coding**

| Direction | Meaning |
|---|---|
| 0 | Uplink, i.e. transmission of a data unit (such as MSDU or A-MSDU) from a non-AP STA (or non-AP MLD) to an AP (or AP MLD). |
| 1 | Downlink, i.e. transmission of a data unit (such as MSDU or A-MSDU) from the AP (or AP MLD) to the non-AP STA (or non-AP MLD). |
| 2 | Direct link, that is, transmission of a data unit (such as MSDU or A-MSDU) through Peer-to-Peer link. |
| 3 | Reserved |

The TID field contains the TID value corresponding to the data unit described by this element. The first TID mentioned above can be carried in the TID field. For example, the TID field may be set to the same value as the user priority field.

The user priority field contains the user priority value (0-7) corresponding to the data unit described by this element. The first user priority mentioned above can be carried in the TID field. If an Intra-Access Category Priority element exists in the SCS Descriptor element, the User Priority field is set to the value of the User Priority field in the Intra-Access Category Priority element.

The "whether out-of-order delivery is allowed" field can be used to carry the first information mentioned above. The "whether out-of-order delivery is allowed" field is used to indicate whether out-of-order delivery is allowed for the data unit described by this element (such as MSDU or A-MSDU) (note: the out-of-order delivery here refers to there may be a difference between the time sequence in which the sender sends data units at MAC SAP and the time sequence in which the receiver receives data units at MAC SAP). For example, the value of the "whether out-of-order is allowed" field being 0 indicates that out-of-order delivery is not allowed for the data unit described by the element. The value of the "whether out-of-order is allowed" field being 1 indicates that out-of-order delivery at the MAC SAP is allowed for the data unit described by the element.

The data unit processing field is used to carry the fifth information mentioned above. The data unit processing field may be used to indicate the processing mode for in-order or out-of-order delivery of the data units described by this element. An example of the encoding manner of this field is given in Table 2.

**Table 2: Data unit processing domain encoding**

| Data unit processing domain value | Meaning |
|---|---|
| 0 (or other value) | Data units are not distinguished (referring to data units corresponding to the TID indicated by the TID field), a uniform SN sequence (or SN counter) and/or PN sequence (or PN counter) is used for the data units. That is, the data units corresponding to the TID indicated by the TID field is treated as data units of the same type. |
| 1 (or other value) | Distinguish between two types of data units (such as data units with low latency transmission requirement and data units with non-low latency transmission requirement), different SN sequences and/or PN sequences are allocated for the two types of data units |
| 2 (or other value) | Distinguish between two types of data units, where one type corresponds to one of the associated TCLAS elements, and the other type corresponds to the other associated TCLAS element(s), and different SN sequences and/or PN sequences are allocated to the two types of data units. |
| 3 (or other value) | The data units are distinguished according to the content described by the associated TCLAS elements, each associated TCLAS element corresponding to one type of data units, and different SN sequences (or SN counters) and/or PN sequences (or PN counters) are allocated to different types of data units. This situation is suitable to the case that each data unit can only match one TCLAS element among the associated TCLAS elements. |

The "whether out-of-order is allowed for same type" field can be used to carry the sixth information mentioned above. The "whether out-of-order is allowed for same type" field is used to indicate for the same type of data units (note: the method of distinguishing types may be referred to the indication in the data unit processing field; data units of the same type may use the same SN sequence and/or PN sequence), whether out-of-order delivery at MAC SAP is allowed for this type of data units For example, a value of the "whether out-of-order is allowed for same type" field being 0 indicates that out-of-order delivery at MAC SAP is not allowed for this type of data units. A value of the "whether out-of-order is allowed for same type" field being 1 indicates that out-of-order delivery at MAC SAP is allowed for this type of data units.

The "additional parameter presence bitmap" field contains a bitmap. If the i-th field starting from the "maximum out-of-order hole size" field appears in this element, then the i-th entry of the bitmap is set to 1; otherwise, it is set to 0.

The link ID field contains the link identifier. The identifier corresponds to the link on which the direct link transmission will occur. If the direction field is not equal to 2 (indicating a direct link), the field is retained.

The content of the "minimum service interval" field is related to the value of the "direction" field.

For example, if the "direction" field is set to 0 (uplink), the "minimum service interval" field contains an unsigned integer for specifying the minimum time interval between the start times of two consecutive service periods allocated to the STA for uplink frame exchange. This minimum time interval is in microseconds.

As another example, if the "direction" field is set to 1 (downlink), the "minimum service interval" field contains an unsigned integer for specifying the minimum time interval between the start times of two consecutive service periods allocated to the STA for downlink frame exchange. This minimum time interval is in microseconds.

As another example, if the "direction" field is set to 2 (direct link), the minimum service interval field contains an unsigned integer for specifying the minimum time interval between the start times of two consecutive service periods allocated to the STA for direct link frame exchange. This minimum time interval is in microseconds.

The content of the "maximum service interval" field is related to the value of the "direction" field.

For example, if the "direction" field is set to 0 (uplink), the "maximum service interval" field contains an unsigned integer for specifying the maximum time interval between the start times of two consecutive service periods allocated to the STA for uplink frame exchange. This maximum time interval is in microseconds.

As another example, if the "direction" field is set to 1 (downlink), the maximum service interval field contains an unsigned integer for specifying the maximum time interval between the start times of two consecutive service periods allocated to the STA for the downlink frame exchange sequence. This maximum time interval is in microseconds.

As another example, if the "direction" field is set to 2 (direct link), the maximum service interval field contains an unsigned integer for specifying the maximum time interval between the start times of two consecutive service periods allocated to the STA for direct link frame exchange. This maximum time interval is in microseconds.

It should be understood that the value of the "maximum service interval" field is greater than or equal to the value of the "minimum service interval" field.

The minimum data rate field contains an unsigned integer that indicates the lowest data rate for transmitting data units (such MSDU or A-MSDU) belonging to the service flow described by this element at the MAC SAP. The unit of this field is kilobits per second.

The delay bound field contains an unsigned integer (in microseconds) that indicates the maximum time for transmitting data units (such as MSDU or A-MSDU) belonging to the traffic flow described by this element. Taking an MSDU or an A-MSDU as an example, the transmission time is measured from the moment the first MSDU among the MSDUs or the MSDUs constituting the A-MSDU arrives at the local MAC sublayer via the local MAC SAP until the moment the MPDU containing the MSDU is successfully transmitted to the destination.

The maximum out-of-order hole field can be used to carry the allowed maximum size of one hole mentioned above. The introduction of "the allowed maximum size of one hole" may be referred to the description above, which will not be repeated here.

The maximum out-of-order hole number field may be used to carry the maximum number of holes allowed in the first period mentioned above. The introduction of "the maximum number of holes allowed in the first period" can be referred to the description above, and will not be repeated here.

The minimum out-of-order hole interval field can be used to carry the minimum interval allowed between two adjacent holes mentioned above. The introduction of "minimum interval allowed between two adjacent holes" can be referred to the description above, and will not be repeated here.

The maximum out-of-order hole interval field can be used to carry the maximum interval allowed between two adjacent holes mentioned above. The introduction of "the maximum interval allowed between two adjacent holes" can be referred to the description above, and will not be repeated here.

The maximum expected out-of-order hole filling time field may be used to carry the allowed maximum target time interval mentioned above. The introduction of "allowed maximum target time interval" may be referred to the description above and will not be repeated here.

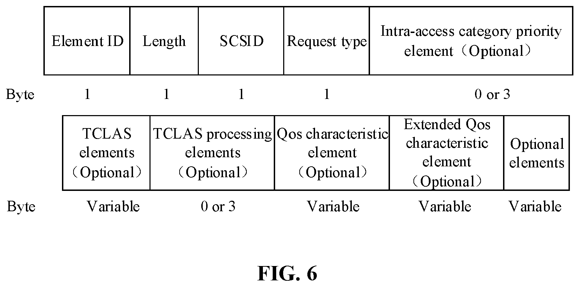

The extended QoS characteristic element field has been described in detail above. The extended QoS characteristic element field may be carried in an SCS descriptor element field. The SCS descriptor element defines related information of the flow that is being classified using the SCS process. FIG. 6 is an example diagram of an SCS descriptor element field.

Referring to fig. 6, the element ID field and the length field may follow the definitions in the IEEE 802.11 specification. The SCSID field is set to a non-zero value selected by the non-AP STA that identifies, via this field, the SCS stream specified in this SCS descriptor element.

The request type field is used to identify the type of SCS request. The types of SCS request include: add, remove, change, etc.

When the request type field is equal to "add" or "change", an Intra-Access Category Priority Element field is included in the frame, which follows the "Internal Access Category Priority Element" definition in the IEEE 802.11 specification. The Internal Access Category Priority Element is relative priority information of the flow regarding the access category (AC) definition provided by the non-AP STA to the AP.

The TCLAS Element field contains zero or more TCLAS elements that specify how incoming MSDUs are classified as part of this SCS stream. The TCLAS element field follows the "TCLAS element" definition of the IEEE 802.11 specification. When the request type field is equal to "add" or "change", there are one or more TCLAS elements. When the request type field is equal to "remove", no TCLAS element exists.

The TCLAS element contains a set of necessary parameters for identifying various PDUs or incoming MSDUs (from higher layers among all STAs or from the distribution system (DS) corresponding to the AP) belonging to a specific traffic stream (TS).

When a plurality of TCLAS elements exist in the TCLAS element field, and the TCLAS processing element field contains one TCLAS processing element, the TCLAS processing element defines how to process the multiple TCLAS elements, and the specific processing method conforms to the definition of "TCLAS processing element" in the IEEE 802.11 specification. The TCLAS processing element, when included in the SCS description element, may indicate one of:

The PDU content or MSDU parameters must match the parameters in all relevant TCLAS elements;

PDU contents or MSDU parameter must match at least one relevant TCLAS element;

PDUs or MSDUs that do not belong to any other TS are classified as TS that uses TCLAS to process elements, in which case there is no associated TCLAS element.

The QoS characteristic element field contains zero or one QoS characteristic element to describe traffic characteristics and QoS expectations belonging to the SCS stream. When the request type field is equal to "add" or "change", there are 0 or 1 QoS characteristic element. When the request type field is equal to "remove", there is no QoS characteristic element.

The extended QoS characteristic element field contains zero or one extended QoS characteristic element to describe traffic characteristics and QoS expectations belonging to the SCS stream (which allows out-of-order delivery for data units). When the request type field is equal to "add" or "change", there are 0 or 1 extended QoS characteristic element. When the request type field is equal to "remove", there is no QoS characteristic element.

Hereinafter, embodiments of the present application will be described in detail from the perspective of frame interaction.

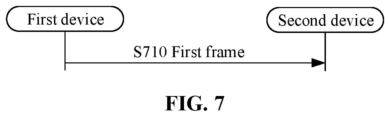

Fig. 7 is a flow chart of a method for radio communication according to an embodiment of the present application. Figure 7 is depicted from the perspective of interaction between the first device and the second device. Referring to FIG. 7, in step S710, the first device sends a first frame to the second device.

In some implementations, the first frame may be used to negotiate about whether out-of-order delivery is allowed and/or out-of-order delivery related parameter(s). For example, the first frame may include one or more of the aforementioned first information to sixth information. Details of the first information to the sixth information may be referred to the above description, and will not be repeatedly described here.

In some implementations, the first device may be a non-AP STA or a non-AP MLD. The second device may be an AP or an AP MLD.

In some implementations, the first frame may be a request frame, such as an SCS request frame.

In some implementations, the first frame may be a response frame, such as an SCS response frame.

In some implementations, the first frame may be a frame defined in the negotiation process of in-order/out-of-order delivery of other data units.

Taking the first frame being a first request frame (such as an SCS request frame) as an example, the second device may accept the request corresponding to the first request frame or may reject the request corresponding to the first request frame.

In some implementations, if the second device rejects the SCS request corresponding to the first request frame, the second device may send a first response frame to the first device. The first response frame includes seventh information. The seventh information may be used to indicate that the second device does not support out-of-order delivery.

In some implementations, if the second device rejects the request corresponding to the first request frame, the second device may send a first response frame to the first device. The first response frame includes seventh information. The seventh information may be used to indicate that the second device rejects the request corresponding to the first request frame, and the seventh information indicates a modification proposal of the out-of-order delivery parameter(s).

In some implementations, after receiving the first response frame, the first device may send a second request frame to the second device. The second request frame may include the out-of-order delivery parameter(s) modified based on the modification proposal.

In some implementations, the first device negotiates in-order or out-of-order delivery with the second device. After the negotiation is successfully completed, the first device sends a second request frame (such as an SCS request frame) to the second device, and the second request frame includes the negotiated out-of-order delivery parameter(s).

In some implementations, the first frame is a first request frame. After the first device sends the first request frame to the second device, the first device receives the first response frame sent by the second device. The first response frame includes eighth information for indicating that the request corresponding to the first request frame is successfully accepted. After receiving the first response frame, the first device and/or the second device transmit the first traffic flow according to whether out-of-order delivery is allowed and/or out-of-order delivery parameter(s).

In some implementations, in a case where a request corresponding to the first request frame is successfully accepted, if the first TID is a TID that allows out-of-order delivery or the first user priority is a user priority that allows out-of-order delivery, the transmission of the first traffic flow meets one or more requirements indicated by the out-of-order delivery parameter(s), or the first traffic flow needs to be transmitted based on one or more requirements indicated by the out-of-order delivery parameter(s) (or in other words, the transmission of the first service flow needs to be guided by one or more requirements indicated by the out-of-order delivery parameter(s)). The first request frame indicates that it is allowed to perform out-of-order delivery for data units of the first traffic flow.

In some implementations, in a case where the request corresponding to the first request frame is successfully accepted, if the data units in the first traffic flow correspond to a same SN space, a same SN sequence, a same PN space or a same PN sequence, the data units in the first traffic flow adopt PN-window-based replay detection. The first request frame indicates that it is allowed to perform out-of-order delivery for the data units of the first traffic flow.

In some implementations, in a case where the request corresponding to the first request frame is successfully accepted, if the data units in the first traffic flow correspond to different SN spaces, different SN sequences, different PN spaces, or different PN sequences, the data units in the first traffic flow adopt PN-window-based replay detection, or the data units in the first traffic flow adopt non-PN-window-based replay detection. The first request frame indicates that it is allowed to perform out-of-order delivery for the data units of the first traffic flow.

The interaction process shown in FIG. 7 may occur in the SCS process. That is, the embodiments of the present application can be applied to the SCS process and extend the SCS process. In this case, the interaction process provided by the embodiment of the present application may be referred to as an extended SCS process. Hereinafter, an embodiment of the present application will be described in more detail by taking the update or expansion of the SCS process as an example. It should be noted that the following examples are merely to help those skilled in the art understand the embodiments of the present application, and are not intended to limit the embodiments of the present application to the specific numerical values or specific scenarios illustrated. It will be apparent to those skilled in the art that various equivalent modifications or changes can be made based on the given examples, and such modifications or changes also fall within the scope of the embodiments of the present application.

This example proposes a description method of traffic flow that allows out-of-order delivery, and an extended SCS mechanism and method for traffic flow description and classification of data units that allow out-of-order delivery.

### Define extended QoS characteristic element(s) for description of the traffic flow that allows out-of-order delivery

The extended QoS characteristic element(s) contains a set of out-of-order delivery parameters. These parameters define, in a specific context of a station or multi-link device, characteristics and QoS expectations of traffic flows allowing out-of-order delivery of data units. It is intended for use by non-AP STA (or non-AP MLD) and AP (or AP MLD) to support the transmission of QoS traffic flows using the SCS process and the process defined in the negotiation of in-order/out-of-order delivery of data units. Among them, out-of-order delivery means that there may be a difference between the time order in which the sending end of the data units sends the data units at the MAC SAP and the time order in which the receiving end receives the data units at the MAC SAP (note: this refers to the difference between the order in which data units are received and the order in which the data units were sent, which occurs independently of data unit loss. That is, it refers to the difference between the receiving order of the data units and the sending order of the data units that occurs without the occurrence of data unit loss being determined). The detailed description of out-of-order delivery may be referred to the description above, and will not be described in detail here.

### Definition of extended SCS process

### First: Extended SCS process functions and behaviors

The SCS flow allows using Layer 2 and/or Layer 3 signaling to establish classification to match incoming individually addressed data units (such as MSDUs or A-MSDUs). Once the data units are classified, the individually addressed data units matching the classification are assigned to an AC and marked with drop eligibility. When intra-access category priority is enabled, the SCS process allows data units matching the classification to be assigned to primary or alternate enhanced distributed channel access (EDCA) transmission queue to apply more granular priority.

The extended SCS process (referring to an extension to the SCS process currently defined by IEEE 802.11) is used for the non-AP STA (or non-AP MLD) to request the AP (or AP MLD) to classify incoming individually addressed data units (MSDUs or A-MSDUs) according to the parameters provided by the non-AP STA (or non-AP MLD) and/or to describe its flow characteristics to the AP (or AP MLD). The extended SCS process can be used to describe stream characteristics that allow out-of-order delivery for data units (such as MSDUs or A-MSDUs). Out-of-order delivery means that there may be a difference between the time order in which the sender sends data units at the MAC SAP and the time order in which the receiver receives data units at the MAC SAP, and the out-of-order degree allowed by the SCS stream can be negotiated and determined by the relevant fields in the extended QoS characteristic element(s) carried by the relevant management frames (such as the SCS request frame and/or the SCS response frame) in the SCS process (the relevant description of the extended QoS characteristic element(s) can be refer to the description above and will not be described in detail here). Furthermore, individually addressed data units that match the corresponding direction of the classification may be mapped to a specific TID and/or a specific user priority. For example, depending on whether it is allowed to perform out-of-order delivery for the individually addressed data units matching the classification and/or the manner and transmission parameters for performing the out-of-order delivery, an individually addressed data unit is mapped to the "whether out-of-order delivery is allowed" parameter corresponding to it and/or a specific TID and/or specific user priority that matches the manner and transmission parameters for performing out-of-order delivery. Here, for individually addressed data units matching classification mapped to a specific TID and/or specific user priority, the sending end of the data units transmits data according to the out-of-order delivery parameters previously negotiated.

In particular, when an SCS request is successfully accepted, the extended QoS characteristic element(s) carried by it includes whether out-of-order delivery is allowed and/or the manner and transmission parameters for performing out-of-order delivery, and an individually addressed data unit that match the corresponding direction of the classification is mapped to the "whether out-of-order delivery is allowed" parameter corresponding to it and/or a specific TID and/or specific user priority that matches the manner and transmission parameters for performing out-of-order delivery.

In order to facilitate understanding, the extended SCS process is illustrated in more detail below in connection with two specific embodiments.

### Embodiment 1

When an SCS request is successfully accepted, the values of various field in the extended QoS characteristic element(s) carried by it are as follows.

The value of direction field is indicated as 1. That is, the direction field indicates downlink. The downlink refers to a link that sends data units (such as MSDUs or A-MSDUs) from an AP (or AP MLD) to a non-AP STA (or non-AP MLD).

The TID field value and the user priority field value are indicated as 6, respectively.

The value of the "whether out-of-order is allowed" field being 1 indicates that the data unit(s) described by this element is allowed to be transmitted out-of-order at MAC SAP.

The value of the data unit processing field being 0 indicates that the data units are not distinguished (referring to the data units corresponding to the TID indicated by the TID field), and a uniform SN sequence (or SN counter) and/or PN sequence (or PN counter) is adopted for the data units, that is, the data units corresponding to the TID indicated by the TID field is processed as data units of the same type.

The value of the "whether out-of-order is allowed for same type" field being 1 indicates that data units of the same type are allowed to perform out-of-order delivery at MAC SAP.

The value of the maximum out-of-order hole size field is 20.

The AP (or AP MLD), as the sender of the data units, adopts the following processing method.

### 1) Data units with TID value of 6 are not distinguished.

For a TID with a value of 6, data units of different traffic flows or different tags are not distinguished. Data units, with TID value of 6, corresponding to different service flows, different transmission latency requirements, different transmission urgency degrees or other QoS requirements are not tagged.

### 2) SN allocation and processing

If the receiver is a non-MLD STA, the SN counter or SN sequence is allocated according to < station MAC address identified by address 1, TID (6) >. If the receiver is an MLD, the SN counter or SN sequence is allocated according to <the MLD MAC address to which the STA identified by address 1 is affiliated, TID (6)>. The address 1 mentioned above refers to the RA of the STA act as the receiving end.

### 3) PN allocation and processing

The PN counter or PN sequence is allocated according to <TA, RA, TID i or corresponding priority>.

For example, if the receiver is a non-MLD STA, the PN counter or PN sequence is allocated according to <STA MAC address identified by TA, STA MAC address identified by RA, TID (6), or user priority (6)>. As another example, if the receiver is an MLD, the PN counter or PN sequence is allocated according to <MLD MAC address to which the STA identified by TA is affiliated, MLD MAC address to which the STA identified by RA is affiliated, TID (6) or user priority (6)>.

The non-AP STA (or non-AP MLD), as the receiver of the data unit, adopts the following processing method for the data unit with a TID value of 6.

### 1) SN processing and reordering

For a received data unit corresponding to < TA, TID (6) >, even if there is previously unreceived data unit with SN lower than that of this data unit (i.e., the data unit of which the transmission order is earlier but not yet received), when the difference between the SN of the received and to-be-transmitted data unit and the SN of an unreceived data unit (for example, the earliest unreceived data unit can be used) is less than or equal to a set threshold (i.e., the value of the SN deviation threshold field, which is 20 in this example), the data unit for this specific TID or tag (such as MSDU or A-MSDU) is still delivered to the next MAC process (or delivered to the upper layer).

### 2) PN processing and replay detection

Assign replay counter according to < TA, RA, TID (6) or user priority (6) > and perform replay detection. Replay detection can be performed for data units by using PN-window-based replay detection (in this example, the PN window size is 20).

### Embodiment 2

When an SCS request is successfully accepted, the values of various field in the extended QoS characteristic element(s) carried by it are as follows.

The value of the direction field indicates 0, i.e. the direction field indicates uplink. The uplink refers to a link that sends data units (such as MSDU or A-MSDU) from a non-AP STA (or a non-AP MLD) to an AP (or an AP MLD).

The value of the TID field and the value of the user priority field are indicated as 5, respectively.

The value of the "whether out-of-order is allowed" field being 1 indicates that the data unit(s) described by this element is allowed to be transmitted out-of-order at MAC SAP.

The value of the data unit processing field being 1 indicates that two types of data units (such as data units with low latency transmission requirements and data units with non-low latency transmission requirements) are distinguished, and different SN sequences and/or PN sequences are assigned to the two types of data units.

The value of the "whether out-of-order is allowed for same type" field being 0 indicates that it is not allowed to perform out-of-order delivery for the same type of data units at MAC SAP.

The non-AP STA (or non-AP MLD), as the sender of the data units, adopts the following processing method to the data units having a TID value of 5.

### 1) Data unit tag

Differentiate, for uplink data units with TID being 5, between data units of latency-sensitive service flows and data units of non-latency-sensitive service flows, and tag the different types of data units. That is, a latency sensitive flag is assigned to data units of a latency sensitive traffic flow. A non-delay sensitive flag is assigned to data units of a non-latency sensitive traffic flow.

### 2) SN allocation and processing

The SN counter or SN sequence is allocated according to < MLD MAC address to which the STA identified by address 1 is affiliated, TID (5), data unit tag >.

For a given receiver, the data units corresponding to TID (5) (i.e. individually addressed data units) adopts an SN space and multiple counters. The counter is indexed by < MLD MAC address to which the STA identified by address 1 is affiliated, TID (5), data unit tag >. The above address 1 refers to the RA of the STA act as receiving end.

### 3) PN allocation and processing

The PN counter or PN sequence is assigned according to <MLD MAC address to which the STA identified by TA is affiliated, MLD MAC address to which the STA identified by RA is affiliated, TID (5) or user priority (5), data unit tag (latency sensitive tag or non-latency sensitive tag)>.

For a given receiver, the data units corresponding to TID (5) (i.e. individually addressed data units) adopt a PN space and multiple counters (or PN sequences). Wherein the counter is indexed by < MLD MAC address to which the STA identified by TA is affiliated, MLD MAC address to which the STA identified by RA is affiliated, TID (5) or user priority, data unit tag >.

The AP (or AP MLD), as the receiving end of the data units, adopts the following processing method to the data units having a TID value of 5.

### 1) SN processing and reordering

When the sender is a non-MLD STA, the reordering buffer is allocated and/or controlled according to <the STA MAC address identified by TA, TID(5), data unit tag (i.e., latency-sensitive tag and non-latency-sensitive tag)>.

When the sender is an MLD, the reordering buffer is allocated and/or controlled according to the < MLD MAC address to which the STA identified by TA is affiliated, TID (5), data unit tag (latency sensitive tag and non-latency sensitive tag) >.

### 2) PN processing and replay detection

The replay counter is allocated according to <TA, RA, TID (5) or user priority (5), data unit tag (latency sensitive tag and non-latency sensitive tag)> and replay detection is performed.

### Second: Extend SCS process rules and constraints

The non-AP STA (or non-AP MLD) and the AP (or AP MLD) may establish an SCS stream that allows out-of-order delivery of data units (such as MSDUs or A-MSDUs) according to the SCS process currently defined by IEEE 802.11 and the additional rules and constraints proposed by embodiments of the present application (see description below).

If the request type field in the SCS request frame transmitted by the non-AP STA (or non-AP MLD) is set to "Add" or "Change", the SCS request frame contains an SCS descriptor element, and the SCS descriptor element contains an extended QoS characteristic element. The extended QoS characteristic element describes the traffic flow characteristic of the requested SCS stream that allows out-of-order delivery. In particular, if the non-AP STA (or the non-AP MLD) is uncertain whether the AP (or the AP MLD) allows out-of-order delivery of the SCS stream, then the non-AP STA (or the non-AP MLD) shall not send an SCS request frame containing an SCS descriptor element of an extended QoS characteristic element to the AP (or the AP MLD). For example, if the non-AP STA (or the non-AP MLD) does not receive the capability element transmitted by the AP (or the AP MLD) (the value of the capability element being 1 means that the AP (or the AP MLD) allows out-of-order delivery of the SCS stream), then the non-AP STA (or the non-AP MLD) shall not send an SCS request frame containing the SCS descriptor element of the extended QoS characteristic element to the AP (or the AP MLD).

The MLD maintains the SCSID for each non-AP MLD at the MLD level, i.e. the SCSID used by the non-AP STA affiliated with the non-AP MLD in the SCS request frame sent to the AP affiliated with the AP MLD is unique among all STAs affiliated with the non-AP MLD. The SCSID is used by non-AP MLD to request the creation, modification, or deletion of SCS stream. The SCSID is used by the AP MLD to identify the SCS stream.

Sending, by a non-AP STA affiliated with a non-AP MLD to an AP affiliated with an AP MLD, an SCS request frame containing an extended QoS characteristic element (where the direction field of the extended QoS characteristic element is set to uplink or downlink), or an SCS request frame not containing a QoS characteristic element, is interpreted as a request to create or modify an SCS stream applied to an MLD level.

When the AP (or AP MLD) refuses to request the SCS request, the value of the SCS state field of the SCS response frame may be set to a value corresponding to one of: REQUEST _ DECLINED; REQUESTED _ TCLAS _ NOT _ SUPPORTED _ BY _ AP; REJECTED _ WITH _ SUGGESTED _ CHANGES; INSUFFICIENT _ TCLAS_ PROCESSING _ RESOURCES; or REQUESTED _ OUT _ OF _ ORDER _ DELIVERY _ NOT _ SUPPORTED _ BY _ AP.

If the AP (or AP MLD) sets the value of the state field to REJECTED _ WITH _ SUGGESTED _ CHANGES, the AP may include an SCS descriptor element of the extended QoS characteristic element in the SCS response frame to represent the suggested extended QoS characteristic parameter of the SCS stream. In particular, the allowed out-of-order delivery parameter(s) may be included in the SCS response frame.

The AP (or AP MLD) may schedule and transmit data units according to parameters defined by the extended QoS characteristic element. In particular, when an SCS request is successfully accepted and the extended QoS characteristic element carried therein contains out-of-order delivery parameter(s), the AP (or the AP MLD) and/or the non-AP STA (or the non-AP MLD) shall perform data unit transmission for the data units corresponding to the designated TID and/or user priority according to the allowed out-of-order delivery requirements (including whether out-of-order is allowed, data unit processing, whether out-of-order is allowed for same type, maximum out-of-order hole size, maximum out-of-order hole number, minimum out-of-order hole interval, maximum out-of-order hole interval, maximum expected out-of-order hole filling time, etc.) in the service flow specified direction defined by the extended QoS characteristic element.

In particular, when an SCS request is successfully accepted and the extended QoS characteristic element carried therein includes out-of-order delivery parameter(s), it is necessary to ensure that the data units corresponding to the designated TID and/or user priority meets the requirements of the out-of-order delivery parameter (s)in the service flow specified direction defined by the extended QoS characteristic element.

### Embodiment 3

If the SCS request frame sent by the non-AP STA (or the non-AP MLD) carries the extended QoS characteristic element, and the transmission of the traffic flow defined by the extended QoS characteristic element (the traffic flow corresponding to the TID and/or user priority in the specified direction) does not meet the requirements of the out-of-order delivery parameter(s) defined by the extended QoS characteristic element, that is, it does not meet the requirements corresponding to one or more field values among the related parameters specified by the extended QoS characteristic element, such as whether out-of-order delivery is allowed, data unit processing, whether out-of-order is allowed for same type, maximum out-of-order hole size, maximum out-of-order hole number, minimum out-of-order hole interval, maximum out-of-order hole interval, maximum expected out-of-order hole filling time, etc., then the AP (or AP MLD) may send an SCS response frame to the non-AP STA (or non-AP MLD) to reject the SCS request. The AP (or AP MLD) may set the state value corresponding to "REQUESTED _ OUT _ OF _ ORDER _ DELIVERY _ NOT _ SUPPORTED _ BY _ AP" or "REJECTED _ WITH _ SUGGESTED _ CHANGES" in the SCS state field of the SCS response frame. After receiving the SCS response frame, the non-AP STA (or the non-AP MLD) may adopt one of the following methods:
(1) according to the out-of-order delivery parameter(s) in the suggested extended QoS characteristic element carried in the SCS response frame, modifying the relevant parameter(s) in the extended QoS characteristic element in the SCS request and re-initiating the SCS request;
(2) initiating negotiation of in-order/out-of-order delivery of data units to the AP (or AP MLD), so that the transmission of the service flow defined by the extended QoS characteristic element carried in the SCS request meets the requirements of out-of-order delivery parameter(s) defined by the extended QoS characteristic element, that is, meets the requirements corresponding to one or more field values among related parameters specified by the extended QoS characteristic element, such as whether out-of-order is allowed, data unit processing, whether out-of-order is allowed for same type, maximum out-of-order hole size, maximum out-of-order hole number, minimum out-of-order hole interval, maximum out-of-order hole interval, maximum expected out-of-order hole filling time, etc. When the negotiation of in-order/out-of-order delivery of data units is successfully completed, the non-AP STA (or non-AP MLD) re-initiates the SCS request to the AP (or AP MLD).

### Embodiment 4

If the data unit transmission in the target traffic flow of the non-AP STA (or the non-AP MLD) (i.e., the traffic flow, corresponding to the specified TID and/or user priority, in the specified direction defined by the extended QoS characteristic element) does not meet the requirements of the out-of-order delivery parameter(s) allowed by the extended QoS characteristic element, that is, does not meet the requirements corresponding to one or more field values among the related parameters specified by the extended QoS characteristic element, such as whether out-of-order is allowed, data unit processing, whether out-of-order is allowed for same type, maximum out-of-order hole size, maximum out-of-order hole number, minimum out-of-order hole interval, maximum out-of-order hole interval, maximum expected out-of-order hole filling time, etc., then the non-AP STA (or the non-AP MLD) shall not initiate an SCS request to the AP (or AP MLD) first. Instead, it shall first initiate negotiation of in-order/out-of-order delivery of data units with the AP (or AP MLD), so that the transmission of data units in the traffic flow defined by the Extended QoS characteristics element complies with the requirements of the out-of-order delivery parameter(s) allowed by the extended QoS characteristics element.. When negotiation of in-order/out-of-order delivery of the data units is successfully completed, the non-AP STA (or the non-AP MLD) initiates an SCS request to the AP (or the AP MLD).

By introducing a processing mechanism for out-of-order delivery of data units in specific scenarios (such as a scenario where multiple traffic flows are mapped to one TID, or a scenario where Layer 2 and Layer 3 protocols coordinate to process low-latency flow transmission), the head-of-line blocking issue can be resolved. To ensure that the out-of-order delivery mechanism is effectively applied to the transmission of low-latency flows, the non-AP STA (or non-AP MLD) and the AP (or AP MLD) need to negotiate and determine whether the out-of-order delivery mechanism. the related out-of-order delivery parameter(s) and their associated TID and/or user priority parameters are adopted for the SCS stream. This example proposes a description method of traffic flow that allows out-of-order delivery, and an extended SCS mechanism and method for traffic flow description and classification of data units that allow out-of-order delivery. This example defines the extended QoS characteristics element for describing traffic flows that allow out-of-order delivery, and defines the extended SCS process for the classification and traffic flow description of data units that allow out-of-order delivery. The above improvement helps both parties of the communications to clarify the out-of-order delivery mode, thus ensuring the effective application of out-of-order delivery in practice.

The out-of-order delivery method described in each of the above embodiments may be applied to an SCS flow establishment and negotiation mechanism in a single BSS scenario and a multi-link operation scenario, and may also be applied to a scenario of SCS flow establishment and negotiation in a multi-AP collaboration scenario.

The method embodiments of the present application are described in detail above, and the apparatus embodiments of the present application are described in detail below. It should be understood that the description of the method embodiment and the description of the device embodiment correspond to each other, and therefore, the portions not described in detail can be referred to the foregoing method embodiments.

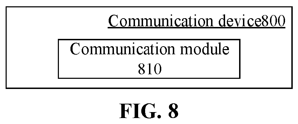

Fig. 8 is a schematic diagram of a communication device according to an embodiment of the present application. The communication apparatus 800 shown in FIG. 8 may be the first device mentioned in the above description. The communication apparatus 800 includes a first communication module 810. The first communication module 810 is configured to send a first frame to a second device. The first frame includes one or more of: first information for indicating whether it is allowed to perform out-of-order delivery for data units in the first traffic flow; second information for indicating quality of service (QoS) characteristic(s) of the first traffic flow that allows out-of-order delivery and/or out-of-order delivery parameter(s) allowed by the first traffic flow; third information for indicating a first traffic identifier (TID) and/or a first user priority corresponding to data units in the first traffic flow; or fourth information for indicating a transmission direction of the first traffic flow.

In some implementations, the second information is related to a hole generated during the out-of-order delivery of the first traffic flow, the hole corresponds to a target data unit in the first traffic flow, the target data unit is a data unit or multiple consecutive data units that are expected to be received but not received, and the sending order of the target data unit is before that of the received data unit(s) in the first traffic flow.

In some implementations, the second information is used to indicate one or more of the following out-of-order delivery parameters:
an allowed maximum size of one hole;
a maximum number of holes allowed in the first period;
a minimum interval allowed between two adjacent holes;
a maximum interval allowed between two adjacent holes; or
an allowed maximum target time interval, the target time interval being a time interval between a moment at which the hole is generated and a moment at which the target data unit is expected to be received.

In some implementations, the first frame further comprises fifth information, and the fifth information is used to indicate in-order or out-of-order processing method of the data units in the first traffic flow.

In some implementations, the the fifth information is used to indicate one or more of following:
the data units in the first traffic flow are processed as data units of a same type;
the data units in the first traffic flow correspond to a same packet number (PN) sequence, a same PN space or a same PN counter;
the data units in the first traffic flow correspond to a same packet number (PN) sequence, a same PN space or a same PN counter;
the data units in the first traffic flow are processed according to multiple types of data units;
the data units in the first traffic flow correspond to multiple SN sequences, multiple SN spaces, or multiple SN counters; or
the data units in the first traffic flow correspond to multiple PN sequences, multiple PN spaces, or multiple PN counters.

In some implementations, the multiple types of data units satisfy one or more of following:
corresponding to different latency requirements;
corresponding to different stream classification TCLAS elements;
corresponding to different data unit tags.

In some implementations, the first frame further comprises sixth information, and the sixth information is used to indicate whether it is allowed to perform out-of-order delivery for the data units of a same type in the first traffic flow.

In some implementations, the first frame comprises a first QoS characteristic field, and the first QoS characteristic field comprises one or more of the first information, the second information, or the third information.

In some implementations, the first frame comprises a stream classification service (SCS) descriptor element field, and the first QoS characteristic element field is located in the SCS descriptor element field.

In some implementations, the first QoS characteristic element field comprises a control information field, the first information and/or the third information are carried in the control information field, and the second information is carried in field(s) other than the control information field in the first QoS characteristic element field.

In some implementations, when the first service flow is a service flow that allows out-of-order delivery, one or more of following are satisfied:
the first TID is a TID that allows or does not allow out-of-order delivery; or
the first user priority is a user priority that allows or does not allow out-of-order delivery.

In some implementations, when the first service flow is a service flow that does not allow out-of-order delivery, one or more of following are satisfied:
the first TID is a TID that does not allow out-of-order delivery; or
the first user priority is a user priority that does not allow out-of-order delivery.

In some implementations, the first frame is a first request frame, and the communication device further comprises:
receiving, by the first device, a first response frame sent by the second device. The first response frame comprises seventh information, and the seventh information is used to indicate one or more of following:
the second device does not support the out-of-order delivery; or
the second device rejects a request corresponding to the first request frame, and the seventh information indicates a modification proposal of the out-of-order delivery parameter(s).

In some implementations, the communication device further comprises:
a second communication module, configured to send a second request frame to the second device. The second request frame comprises out-of-order delivery parameter(s) modified based on the modification proposal.

In some implementations, the communication device further comprises:
a third communication module, configured to negotiate in-order or out-of-order delivery with the second device, and send a second request frame to the second device after the negotiation is successfully completed. The second request frame comprises negotiated out-of-order delivery parameter(s).

In some implementations, the first frame is a first request frame, and the communication device further comprises:
a fourth communication module, configured to receive a first response frame sent by the second device, and transmit the first traffic flow according to whether it is allowed to perform out-of-order delivery and/or the out-of-order delivery parameter(s). The first response frame comprises eighth information, and the eighth information is used to indicate that a request corresponding to the first request frame is successfully accepted.

In some implementations, in a case where a request corresponding to the first request frame is successfully accepted, if the first TID is a TID that allows out-of-order delivery or the first user priority is a user priority that allows out-of-order delivery, a transmission of the first traffic flow meets one or more requirements indicated by the out-of-order delivery parameter(s), or the first traffic flow needs to be transmitted based on one or more requirements indicated by the out-of-order delivery parameter(s). The first request frame indicates that it is allowed to perform out-of-order delivery for data units of the first traffic flow.

In some implementations, in a case where the request corresponding to the first request frame is successfully accepted, if the data units in the first traffic flow correspond to a same SN space, a same SN sequence, a same PN space or a same PN sequence, the data units in the first traffic flow adopt PN-window-based replay detection. The first request frame indicates that it is allowed to perform out-of-order delivery for the data units of the first traffic flow.

In some implementations, in a case where the request corresponding to the first request frame is successfully accepted, if the data units in the first traffic flow correspond to different SN spaces, different SN sequences, different PN spaces, or different PN sequences, the data units in the first traffic flow adopt PN-window-based replay detection, or the data units in the first traffic flow adopt non-PN-window-based replay detection. The first request frame indicates that it is allowed to perform out-of-order delivery for the data units of the first traffic flow.

In one possible implementation, the first frame is an SCS request frame, and the first response frame is an SCS response frame.

In some implementations, the first device is a non-access point station and the second device is an access point. Alternatively, the first device is a non-access point multi-link device and the second device is an access point multi-link device.

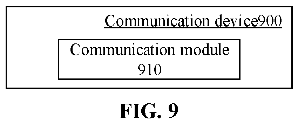

Fig. 9 is a schematic structure diagram of a communication device according to another embodiment of the present application. The communication apparatus 900 shown in FIG. 9 may be the second device mentioned in the above description. The communication apparatus 900 includes a first communication module 910. The first communication module 910 is configured to receive a first frame sent by the first device. The first frame includes one or more of: first information for indicating whether it is allowed to perform out-of-order delivery for data units in the first traffic flow; second information for indicating quality of service (QoS) characteristic(s) of the first traffic flow that allows out-of-order delivery and/or out-of-order delivery parameter(s) allowed by the first traffic flow; third information for indicating a first traffic identifier (TID) and/or a first user priority corresponding to data units in the first traffic flow; or fourth information for indicating a transmission direction of the first traffic flow.

In some implementations, the second information is related to a hole generated during the out-of-order delivery of the first traffic flow, the hole corresponds to a target data unit in the first traffic flow, the target data unit is a data unit or multiple consecutive data units that are expected to be received but not received, and the sending order of the target data unit is before that of the received data unit(s) in the first traffic flow.

In some implementations, the second information is used to indicate one or more of the following out-of-order delivery parameters:
an allowed maximum size of one hole;
a maximum number of holes allowed in the first period;
a minimum interval allowed between two adjacent holes;
a maximum interval allowed between two adjacent holes; or
an allowed maximum target time interval, the target time interval being a time interval between a moment at which the hole is generated and a moment at which the target data unit is expected to be received.

In some implementations, the first frame further comprises fifth information, and the fifth information is used to indicate in-order or out-of-order processing method of the data units in the first traffic flow.

In some implementations, the fifth information is used to indicate one or more of following:
the data units in the first traffic flow are processed as data units of a same type;
the data units in the first traffic flow correspond to a same packet number (PN) sequence, a same PN space or a same PN counter;
the data units in the first traffic flow correspond to a same packet number (PN) sequence, a same PN space or a same PN counter;
the data units in the first traffic flow are processed according to multiple types of data units;
the data units in the first traffic flow correspond to multiple SN sequences, multiple SN spaces, or multiple SN counters; or
the data units in the first traffic flow correspond to multiple PN sequences, multiple PN spaces, or multiple PN counters.

In some implementations, the multiple types of data units satisfy one or more of following:
corresponding to different latency requirements;
corresponding to different stream classification TCLAS elements; or
corresponding to different data unit tags.

In some implementations, the first frame further comprises sixth information, and the sixth information is used to indicate whether it is allowed to perform out-of-order delivery for the data units of a same type in the first traffic flow.

In some implementations, the first frame comprises a first QoS characteristic field, and the first QoS characteristic field comprises one or more of the first information, the second information, or the third information.

In some implementations, the first frame comprises a stream classification service (SCS) descriptor element field, and the first QoS characteristic element field is located in the SCS descriptor element field.

In some implementations, the first QoS characteristic element field comprises a control information field, the first information and/or the third information are carried in the control information field, and the second information is carried in field(s) other than the control information field in the first QoS characteristic element field.

In some implementations, when the first service flow is a service flow that allows out-of-order delivery, one or more of following are satisfied:
the first TID is a TID that allows or does not allow out-of-order delivery; or
the first user priority is a user priority that allows or does not allow out-of-order delivery.

In some implementations, when the first service flow is a service flow that does not allow out-of-order delivery, one or more of following are satisfied:
the first TID is a TID that does not allow out-of-order delivery; or
the first user priority is a user priority that does not allow out-of-order delivery.

In some implementations, the first frame is a first request frame, and the communication device further comprises:
a second communication module, configured to send a first response frame to the first device. The first response frame comprises seventh information, and the seventh information is used to indicate one or more of following:
the second device does not support the out-of-order delivery; or
the second device rejects a request corresponding to the first request frame, and the seventh information indicates a modification proposal of the out-of-order delivery parameter(s).

In some implementations, the communication device further comprises:
a third communication module, configured to receive a second request frame sent by the first device. The second request frame includes out-of-order transmission parameters modified based on the modification proposal.

In some implementations, the communication device further comprises:
a fourth communication module, configured to negotiate in-order or out-of-order delivery with the first device, and receive a second request frame sent by the first device after the negotiation is successfully completed. The second request frame comprises the negotiated out-of-order delivery parameter(s).

In some implementations, the first frame is a first request frame, and the communication device further comprises:
a fifth communication module, configured to send a first response frame to the first device, and transmit the first traffic flow according to whether it is allowed to perform out-of-order delivery and/or the out-of-order delivery parameter(s). The first response frame comprises eighth information, and the eighth information is used to indicate that a request corresponding to the first request frame is successfully accepted.

In some implementations, in a case where a request corresponding to the first request frame is successfully accepted, if the first TID is a TID that allows out-of-order delivery or the first user priority is a user priority that allows out-of-order delivery, a transmission of the first traffic flow meets one or more requirements indicated by the out-of-order delivery parameter(s), or the first traffic flow needs to be transmitted based on one or more requirements indicated by the out-of-order delivery parameter(s). The first request frame indicates that it is allowed to perform out-of-order delivery for data units of the first traffic flow.

In some implementations, in a case where the request corresponding to the first request frame is successfully accepted, if the data units in the first traffic flow correspond to a same SN space, a same SN sequence, a same PN space or a same PN sequence, the data units in the first traffic flow adopt PN-window-based replay detection. The first request frame indicates that it is allowed to perform out-of-order delivery for the data units of the first traffic flow.

In some implementations, in a case where the request corresponding to the first request frame is successfully accepted, if the data units in the first traffic flow correspond to different SN spaces, different SN sequences, different PN spaces, or different PN sequences, the data units in the first traffic flow adopt PN-window-based replay detection, or the data units in the first traffic flow adopt non-PN-window-based replay detection. The first request frame indicates that it is allowed to perform out-of-order delivery for the data units of the first traffic flow.

In one possible implementation, the first frame is an SCS request frame, and the first response frame is an SCS response frame.

In some implementations, the first device is a non-access point station and the second device is an access point. Alternatively, the first device is a non-access point multi-link device and the second device is an access point multi-link device.

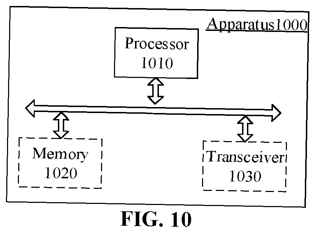

Fig. 10 is a schematic structure diagram of a communication device according to an embodiment of the present application. The dashed line in FIG. 10 indicates that the unit or module is optional. The apparatus 1000 may be used to implement the method described in the method embodiments described above. The apparatus 1000 may be a chip, or a communication device.

The apparatus 1000 may include one or more processors 1010. The processor 1010 may support the apparatus 1000 to implement the methods described in the above method embodiments. The processor 1010 may be a general-purpose processor or a special-purpose processor. For example, the processor may be a central processing unit (CPU). The processor described above may be a general-purpose processor, a digital signal processor (DSP), an application specific integrated circuit (ASIC), an off-the-shelf field programmable gate array (FPGA) or other programmable logic device, a discrete gate or transistor logic device, or a discrete hardware component, The general purpose processor may be a microprocessor or the processor, or may be any conventional processor or the like.

The apparatus 1000 may also include one or more memories 1020. A program is stored on the memory 1020, which can be executed by the processor 1010 so that the processor 1010 performs the method described in the above method embodiments. The memory 1020 may be a separate device independent of the processor 1010 or may be integrated in the processor 1010.

The apparatus 1000 may also include a transceiver 1030. The processor 1010 may communicate with other devices or chips through the transceiver 1030. For example, the processor 1010 may send and receive data with other devices or chips through the transceiver 1030.

Embodiments of the present application also provide a computer-readable storage medium for storing a computer program. Optionally, the computer-readable storage medium may be applied to the communication device according to the embodiment of the present application, and the computer-readable storage medium may cause a computer to implement methods implemented by the communication device in the various embodiments of the present application.

Embodiments of the present application also provide a computer program product. The computer program product includes a program. Optionally, the computer program product may be applied to the communication device according to the embodiment of the present application, and the computer program product may cause a computer to implement methods implemented by the communication device in the various embodiments of the present application.

Embodiments of the present application also provide a computer program. Optionally, the computer program may be applied to the network device or the terminal device according to the embodiment of the present application, and the computer program may cause a computer to implement methods implemented by the communication device in the various embodiments of the present application.

It should be understood that the terms "system" and "network" are often used interchangeably herein. In addition, the terms used in the present application is for explanation of specific embodiments of the present application only, and is not intended to limit the present application. The terms "first," "second," "third," and "fourth," etc. in the specification and claims of the present application and the accompanying drawings are used to distinguish different objects, and are not used to describe a specific order. Furthermore, the terms "comprising" and "having" and any variations thereof are intended to cover non-exclusive inclusions.

It should also be understood that the "indication" mentioned in the embodiments of the present application may be a direct indication, an indirect indication, or indicating having an associated relationship. For example, A indicates B, which may mean that A directly indicates B, for example, B can be acquired by A. It may also mean that A indicates B indirectly, for example, A indicates C, and B can be obtained through C. It may also mean that there is an association relationship between A and B.

In an embodiment of the present application, "B corresponding to A" means that B is associated with A, and B can be determined from A. However, it should also be understood that determining B according to A does not mean that B is determined according to A alone, and that B may also be determined according to A and/or other information.

The term "correspondence" mentioned in the embodiments of the present application may indicate that there is a direct correspondence or indirect correspondence between the two, may indicate that there is a correlation relationship between the two, or may indicate a relationship between indicating and being indicated, configuring and being configured, or the like.

The "predefined" or "pre-configured" mentioned in the embodiments of the present application may be implemented by storing corresponding codes, tables, or other manners that can be used to indicate relevant information in advance in devices (e.g., including terminal devices and network devices), and the present application does not limit specific implementations thereof. For example, predefined may refer to defined in the protocol.

In the embodiments of the present application, the term "and/or" is only an association relationship describing associated objects, and means that there may be three relationships, for example, A and/or B, which may mean that A alone exists, A and B simultaneously exist, and B alone exists. In addition, the character "/" herein generally indicates that the related objects before and after this character are in an "or" relationship.

In the embodiments of the present application, the "comprising" may refer to directly including or indirectly including. Alternatively, the reference to "comprising" in the embodiments of the present application may be replaced with "indicating" or "used to determine". For example, A includes B, can be replaced with A to indicate B, or A is used to determine B.

In various embodiments of the present application, the size of the SN of the above-described processes does not mean the sequence of execution, and the sequence of execution of each process should be determined by its function and internal logic, and should not constitute any limitation on the implementation process of the embodiments of the present application.

In the embodiments of the present application, the "protocol" may refer to a standard protocol in the field of communication, and may include, for example, WIFI protocol, and related protocols applied to future communication systems, and the present application does not limit this.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present application may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer program instructions. When the computer program instructions are loaded and executed on a computer, the processes or functions described in accordance with embodiments of the present application are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that can be read by a computer or a data storage device such as a server, a data center, or the like that includes one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above is merely a specific embodiment of the present application, but the scope of protection of the present application is not limited thereto, and any change or substitution, within the technical scope disclosed in the present application, that can be easily thought of by the person skilled in the art should be covered within the scope of protection of the present application. Therefore, the scope of the present application should be subject to the scope of the claims.

## Claims

1. A method for radio communication, comprising:
sending, by a first device, a first frame to a second device, the first frame comprising one or more of:
first information for indicating whether it is allowed to perform out-of-order delivery for data units in the first traffic flow;
second information for indicating quality of service (QoS) characteristic(s) of the first traffic flow that allows out-of-order delivery and/or out-of-order delivery parameter(s) allowed by the first traffic flow;
third information for indicating a first traffic identifier (TID) and/or a first user priority corresponding to data units in the first traffic flow; or
fourth information for indicating a transmission direction of the first traffic flow.

2. The method according to claim 1, wherein the second information is related to a hole generated during the out-of-order delivery of the first traffic flow, the hole corresponds to a target data unit in the first traffic flow, the target data unit is a data unit or multiple consecutive data units that are expected to be received but not received, and the sending order of the target data unit is before that of the received data unit(s) in the first traffic flow.

3. The method according to claim 2, wherein the second information is used to indicate one or more of following out-of-order delivery parameters:
an allowed maximum size of one hole;
a maximum number of holes allowed in the first period;
a minimum interval allowed between two adjacent holes;
a maximum interval allowed between two adjacent holes; or
an allowed maximum target time interval, the target time interval being a time interval between a moment at which the hole is generated and a moment at which the target data unit is expected to be received.

4. The method according to any one of claims 1 to 3, wherein the first frame further comprises fifth information, and the fifth information is used to indicate in-order or out-of-order processing method of the data units in the first traffic flow.

5. The method according to claim 4, wherein the fifth information is used to indicate one or more of following:
the data units in the first traffic flow are processed as data units of a same type;
the data units in the first traffic flow correspond to a same serial number (SN) sequence, a same SN space, or a same SN counter;
the data units in the first traffic flow correspond to a same packet number (PN) sequence, a same PN space or a same PN counter;
the data units in the first traffic flow are processed according to multiple types of data units;
the data units in the first traffic flow correspond to multiple SN sequences, multiple SN spaces, or multiple SN counters; or
the data units in the first traffic flow correspond to multiple PN sequences, multiple PN spaces, or multiple PN counters.

6. The method according to claim 5, wherein the multiple types of data units satisfy one or more of following:
corresponding to different latency requirements;
corresponding to different stream classification TCLAS elements; or
corresponding to different data unit tags.

7. The method according to any one of claims 1 to 6, wherein the first frame further comprises sixth information, and the sixth information is used to indicate whether it is allowed to perform out-of-order delivery for the data units of a same type in the first traffic flow.

8. The method according to any one of claims 1 to 7, wherein the first frame comprises a first QoS characteristic field, and the first QoS characteristic field comprises one or more of the first information, the second information, or the third information.

9. The method according to claim 8, wherein the first frame comprises a stream classification service (SCS) descriptor element field, and the first QoS characteristic element field is located in the SCS descriptor element field.

10. The method according to claim 8 or 9, wherein the first QoS characteristic element field comprises a control information field, the first information and/or the third information are carried in the control information field, and the second information is carried in field(s) other than the control information field in the first QoS characteristic element field.

11. The method according to any one of claims 1-10, wherein when the first service flow is a service flow that allows out-of-order delivery, one or more of following are satisfied:
the first TID is a TID that allows or does not allow out-of-order delivery; or
the first user priority is a user priority that allows or does not allow out-of-order delivery.

12. The method according to any one of claims 1-10, wherein when the first service flow is a service flow that does not allow out-of-order delivery, one or more of following are satisfied:
the first TID is a TID that does not allow out-of-order delivery; or
the first user priority is a user priority that does not allow out-of-order delivery.

13. The method according to any one of claims 1-12, wherein the first frame is a first request frame, and the method further comprises:
receiving, by the first device, a first response frame sent by the second device, wherein the first response frame comprises seventh information, and the seventh information is used to indicate one or more of following:
the second device does not support the out-of-order delivery; or
the second device rejects a request corresponding to the first request frame, and the seventh information indicates a modification proposal of the out-of-order delivery parameter(s).

14. The method according to claim 13, further comprising:
sending, by the first device, a second request frame to the second device, wherein the second request frame comprises out-of-order delivery parameter(s) modified based on the modification proposal.

15. The method according to claim 13, further comprising:
negotiating, by the first device with the second device, in-order or out-of-order delivery;
and
after negotiation is successfully completed, sending, by the first device, a second request frame to the second device, wherein the second request frame comprises negotiated out-of-order delivery parameter(s).

16. The method according to any one of claims 1-15, wherein the first frame is a first request frame, and the method further comprises:
receiving, by the first device, a first response frame sent by the second device, wherein the first response frame includes eighth information, and the eighth information is used to indicate that a request corresponding to the first request frame is successfully accepted; and
transmitting, by the first device and/or the second device, the first traffic flow according to the whether it is allowed to perform out-of-order delivery and/or the out-of-order delivery parameter(s).

17. The method according to claim 16, wherein in a case where a request corresponding to the first request frame is successfully accepted, if the first TID is a TID that allows out-of-order delivery or the first user priority is a user priority that allows out-of-order delivery, a transmission of the first traffic flow meets one or more requirements indicated by the out-of-order delivery parameter(s), or the first traffic flow needs to be transmitted based on one or more requirements indicated by the out-of-order delivery parameter(s), wherein the first request frame indicates that it is allowed to perform out-of-order delivery for data units of the first traffic flow.

18. The method according to claim 16 or 17, wherein in a case where the request corresponding to the first request frame is successfully accepted, if the data units in the first traffic flow correspond to a same SN space, a same SN sequence, a same PN space or a same PN sequence, the data units in the first traffic flow adopt PN-window-based replay detection, wherein the first request frame indicates that it is allowed to perform out-of-order delivery for the data units of the first traffic flow.

19. The method according to claim 16 or 17, wherein in a case where the request corresponding to the first request frame is successfully accepted, if the data units in the first traffic flow correspond to different SN spaces, different SN sequences, different PN spaces, or different PN sequences, the data units in the first traffic flow adopt PN-window-based replay detection, or the data units in the first traffic flow adopt non-PN-window-based replay detection, wherein the first request frame indicates that it is allowed to perform out-of-order delivery for the data units of the first traffic flow.

20. The method according to any one of claims 13-19, wherein the first frame is an SCS request frame, and the first response frame is an SCS response frame.

21. The method according to any one of claims 1 to 20, wherein
the first device is a non-access point station, and the second device is an access point; or,
the first device is a non-access point multi-link device, and the second device is an access point multi-link device.

22. A method for radio communication, comprising:
receiving, by a second device, a first frame sent by a first device, wherein the first frame includes one or more of:
first information for indicating whether it is allowed to perform out-of-order delivery for data units in the first traffic flow;
second information for indicating quality of service (QoS) characteristic(s) of the first traffic flow that allows out-of-order delivery and/or out-of-order delivery parameter(s) allowed by the first traffic flow;
third information for indicating a first traffic identifier (TID) and/or a first user priority corresponding to data units in the first traffic flow; or
fourth information for indicating a transmission direction of the first traffic flow.

23. The method according to claim 22, wherein the second information is related to a hole generated during the out-of-order delivery of the first traffic flow, the hole corresponds to a target data unit in the first traffic flow, the target data unit is a data unit or multiple consecutive data units that are expected to be received but not received, and the sending order of the target data unit is before that of the received data unit(s) in the first traffic flow.

24. The method according to claim 23, wherein the second information is used to indicate one or more of following out-of-order delivery parameters:
an allowed maximum size of one hole;
a maximum number of holes allowed in the first period;
a minimum interval allowed between two adjacent holes;
a maximum interval allowed between two adjacent holes; or
an allowed maximum target time interval, the target time interval being a time interval between a moment at which the hole is generated and a moment at which the target data unit is expected to be received.

25. The method according to any one of claims 22 to 24, wherein the first frame further comprises fifth information, and the fifth information is used to indicate in-order or out-of-order processing method of the data units in the first traffic flow.

26. The method according to claim 25, wherein the fifth information is used to indicate one or more of following:
the data units in the first traffic flow are processed as data units of a same type;
the data units in the first traffic flow correspond to a same serial number (SN) sequence, a same SN space, or a same SN counter;
the data units in the first traffic flow correspond to a same packet number (PN) sequence, a same PN space or a same PN counter;
the data units in the first traffic flow are processed according to multiple types of data units;
the data units in the first traffic flow correspond to multiple SN sequences, multiple SN spaces, or multiple SN counters; or
the data units in the first traffic flow correspond to multiple PN sequences, multiple PN spaces, or multiple PN counters.

27. The method according to claim 26, wherein the multiple types of data units satisfy one or more of following:
corresponding to different latency requirements;
corresponding to different stream classification TCLAS elements; or
corresponding to different data unit tags.

28. The method according to any one of claims 22 to 27, wherein the first frame further comprises sixth information, and the sixth information is used to indicate whether it is allowed to perform out-of-order delivery for the data units of a same type in the first traffic flow.

29. The method according to any one of claims 22 to 28, wherein the first frame comprises a first QoS characteristic field, and the first QoS characteristic field comprises one or more of the first information, the second information, or the third information.

30. The method according to claim 29, wherein the first frame comprises a stream classification service (SCS) descriptor element field, and the first QoS characteristic element field is located in the SCS descriptor element field.

31. The method according to claim 29 or 30, wherein the first QoS characteristic element field comprises a control information field, the first information and/or the third information are carried in the control information field, and the second information is carried in field(s) other than the control information field in the first QoS characteristic element field.

32. The method according to any one of claims 22 to 31, wherein when the first service flow is a service flow that allows out-of-order delivery, one or more of following are satisfied:
the first TID is a TID that allows or does not allow out-of-order delivery; or
the first user priority is a user priority that allows or does not allow out-of-order delivery.

33. The method according to any one of claims 22 to 31, wherein when the first service flow is a service flow that does not allow out-of-order delivery, one or more of following are satisfied:
the first TID is a TID that does not allow out-of-order delivery; or
the first user priority is a user priority that does not allow out-of-order delivery.

34. The method according to any one of claims 22 to 33, wherein the first frame is a first request frame, and the method further comprises:
sending, by the second device, a first response frame to the first device, wherein the first response frame comprises seventh information, and the seventh information is used to indicate one or more of following:
the second device does not support the out-of-order delivery; or
the second device rejects a request corresponding to the first request frame, and the seventh information indicates a modification proposal of the out-of-order delivery parameter(s).

35. The method according to claim 34, further comprising:
receiving, by the second device, a second request frame sent by the first device, wherein the second request frame comprises out-of-order delivery parameter(s) modified based on the modification proposal.

36. The method according to claim 34, further comprising:
negotiating, by the second device with the first device, in-order or out-of-order delivery;
and
after negotiation is successfully completed, receiving, by the second device, a second request frame sent by the first device, wherein the second request frame comprises negotiated out-of-order delivery parameter(s).

37. The method according to any one of claims 22 to 36, wherein the first frame is a first request frame, and the method further comprises:
sending, by the second device, a first response frame to the first device, wherein the first response frame includes eighth information, and the eighth information is used to indicate that a request corresponding to the first request frame is successfully accepted; and
transmitting, by the second device and/or the first device, the first traffic flow according to the whether it is allowed to perform out-of-order delivery and/or the out-of-order delivery parameter(s).

38. The method according to claim 37, wherein in a case where a request corresponding to the first request frame is successfully accepted, if the first TID is a TID that allows out-of-order delivery or the first user priority is a user priority that allows out-of-order delivery, a transmission of the first traffic flow meets one or more requirements indicated by the out-of-order delivery parameter(s), or the first traffic flow needs to be transmitted based on one or more requirements indicated by the out-of-order delivery parameter(s), wherein the first request frame indicates that it is allowed to perform out-of-order delivery for data units of the first traffic flow.

39. The method according to claim 37 or 38, wherein in a case where the request corresponding to the first request frame is successfully accepted, if the data units in the first traffic flow correspond to a same SN space, a same SN sequence, a same PN space or a same PN sequence, the data units in the first traffic flow adopt PN-window-based replay detection, wherein the first request frame indicates that it is allowed to perform out-of-order delivery for the data units of the first traffic flow.

40. The method according to claim 37 or 38, wherein in a case where the request corresponding to the first request frame is successfully accepted, if the data units in the first traffic flow correspond to different SN spaces, different SN sequences, different PN spaces, or different PN sequences, the data units in the first traffic flow adopt PN-window-based replay detection, or the data units in the first traffic flow adopt non-PN-window-based replay detection, wherein the first request frame indicates that it is allowed to perform out-of-order delivery for the data units of the first traffic flow.

41. The method according to any one of claims 34 to 40, wherein the first frame is an SCS request frame, and the first response frame is an SCS response frame.

42. The method according to any one of claims 22 to 41, wherein
the first device is a non-access point station, and the second device is an access point; or,
the first device is a non-access point multi-link device, and the second device is an access point multi-link device.

43. A communication device, wherein the communication device is a first device, and the communication device comprises:
a first communication module, configured to send a first frame to a second device, wherein the first frame comprises one or more of:
first information for indicating whether it is allowed to perform out-of-order delivery for data units in the first traffic flow;
second information for indicating quality of service (QoS) characteristic(s) of the first traffic flow that allows out-of-order delivery and/or out-of-order delivery parameter(s) allowed by the first traffic flow;
third information for indicating a first traffic identifier (TID) and/or a first user priority corresponding to data units in the first traffic flow; or
fourth information for indicating a transmission direction of the first traffic flow.

44. The communication device according to claim 43, wherein the second information is related to a hole generated during the out-of-order delivery of the first traffic flow, the hole corresponds to a target data unit in the first traffic flow, the target data unit is a data unit or multiple consecutive data units that are expected to be received but not received, and the sending order of the target data unit is before that of the received data unit(s) in the first traffic flow.

45. The communication device according to claim 44, wherein the second information is used to indicate one or more of following out-of-order delivery parameters:
an allowed maximum size of one hole;
a maximum number of holes allowed in the first period;
a minimum interval allowed between two adjacent holes;
a maximum interval allowed between two adjacent holes; or
an allowed maximum target time interval, the target time interval being a time interval between a moment at which the hole is generated and a moment at which the target data unit is expected to be received.

46. The communication device according to any one of claims 43 to 45, wherein the first frame further comprises fifth information, and the fifth information is used to indicate in-order or out-of-order processing method of the data units in the first traffic flow.

47. The communication device according to claim 46, wherein the fifth information is used to indicate one or more of following:
the data units in the first traffic flow are processed as data units of a same type;
the data units in the first traffic flow correspond to a same serial number (SN) sequence, a same SN space, or a same SN counter;
the data units in the first traffic flow correspond to a same packet number (PN) sequence, a same PN space or a same PN counter;
the data units in the first traffic flow are processed according to multiple types of data units;
the data units in the first traffic flow correspond to multiple SN sequences, multiple SN spaces, or multiple SN counters; or
the data units in the first traffic flow correspond to multiple PN sequences, multiple PN spaces, or multiple PN counters.

48. The communication device according to claim 47, wherein the multiple types of data units satisfy one or more of following:
corresponding to different latency requirements;
corresponding to different stream classification TCLAS elements; or
corresponding to different data unit tags.

49. The communication device according to any one of claims 43 to 48, wherein the first frame further comprises sixth information, and the sixth information is used to indicate whether it is allowed to perform out-of-order delivery for the data units of a same type in the first traffic flow.

50. The communication device according to any one of claims 43 to 49, wherein the first frame comprises a first QoS characteristic field, and the first QoS characteristic field comprises one or more of the first information, the second information, or the third information.

51. The communication device according to claim 50, wherein the first frame comprises a stream classification service (SCS) descriptor element field, and the first QoS characteristic element field is located in the SCS descriptor element field.

52. The communication device according to claim 50 or 51, wherein the first QoS characteristic element field comprises a control information field, the first information and/or the third information are carried in the control information field, and the second information is carried in field(s) other than the control information field in the first QoS characteristic element field.

53. The communication device according to any one of claims 43-52, wherein when the first service flow is a service flow that allows out-of-order delivery, one or more of following are satisfied:
the first TID is a TID that allows or does not allow out-of-order delivery; or
the first user priority is a user priority that allows or does not allow out-of-order delivery.

54. The communication device according to any one of claims 43-52, wherein when the first service flow is a service flow that does not allow out-of-order delivery, one or more of following are satisfied:
the first TID is a TID that does not allow out-of-order delivery; or
the first user priority is a user priority that does not allow out-of-order delivery.

55. The communication device according to any one of claims 43-54, wherein the first frame is a first request frame, and the communication device further comprises:
receiving, by the first device, a first response frame sent by the second device, wherein the first response frame comprises seventh information, and the seventh information is used to indicate one or more of following:
the second device does not support the out-of-order delivery; or
the second device rejects a request corresponding to the first request frame, and the seventh information indicates a modification proposal of the out-of-order delivery parameter(s).

56. The communication device according to claim 55, further comprising:
a second communication module, configured to send a second request frame to the second device, wherein the second request frame comprises out-of-order delivery parameter(s) modified based on the modification proposal.

57. The communication device according to claim 55, further comprising:
a third communication module, configured to negotiate in-order or out-of-order delivery with the second device, and send a second request frame to the second device after the negotiation is successfully completed, wherein the second request frame comprises negotiated out-of-order delivery parameter(s).

58. The communication device according to any one of claims 43-57, wherein the first frame is a first request frame, and the communication device further comprises:
a fourth communication module, configured to receive a first response frame sent by the second device, and transmit the first traffic flow according to whether it is allowed to perform out-of-order delivery and/or the out-of-order delivery parameter(s), wherein the first response frame comprises eighth information, and the eighth information is used to indicate that a request corresponding to the first request frame is successfully accepted.

59. The communication device according to claim 58, wherein in a case where a request corresponding to the first request frame is successfully accepted, if the first TID is a TID that allows out-of-order delivery or the first user priority is a user priority that allows out-of-order delivery, a transmission of the first traffic flow meets one or more requirements indicated by the out-of-order delivery parameter(s), or the first traffic flow needs to be transmitted based on one or more requirements indicated by the out-of-order delivery parameter(s), wherein the first request frame indicates that it is allowed to perform out-of-order delivery for data units of the first traffic flow.

60. The communication device according to claim 58 or 59, wherein in a case where the request corresponding to the first request frame is successfully accepted, if the data units in the first traffic flow correspond to a same SN space, a same SN sequence, a same PN space or a same PN sequence, the data units in the first traffic flow adopt PN-window-based replay detection, wherein the first request frame indicates that it is allowed to perform out-of-order delivery for the data units of the first traffic flow.

61. The communication device according to claim 58 or 59, wherein, in a case where the request corresponding to the first request frame is successfully accepted, if the data units in the first traffic flow correspond to different SN spaces, different SN sequences, different PN spaces, or different PN sequences, the data units in the first traffic flow adopt PN-window-based replay detection, or the data units in the first traffic flow adopt non-PN-window-based replay detection, wherein the first request frame indicates that it is allowed to perform out-of-order delivery for the data units of the first traffic flow.

62. The communication device according to any one of claims 55-61, wherein the first frame is an SCS request frame, and the first response frame is an SCS response frame.

63. The communication device according to any one of claims 43 to 62, wherein
the first device is a non-access point station, and the second device is an access point; or,
the first device is a non-access point multi-link device, and the second device is an access point multi-link device.

64. A communication device, wherein the communication device is a second device, and the communication device comprises:
a first communication module, configured to receive a first frame sent by a first device, wherein the first frame comprises one or more of:
first information for indicating whether it is allowed to perform out-of-order delivery for data units in the first traffic flow;
second information for indicating quality of service (QoS) characteristic(s) of the first traffic flow that allows out-of-order delivery and/or out-of-order delivery parameter(s) allowed by the first traffic flow;
third information for indicating a first traffic identifier (TID) and/or a first user priority corresponding to data units in the first traffic flow; or
fourth information for indicating a transmission direction of the first traffic flow.

65. The communication device according to claim 64, wherein the second information is related to a hole generated during the out-of-order delivery of the first traffic flow, the hole corresponds to a target data unit in the first traffic flow, the target data unit is a data unit or multiple consecutive data units that are expected to be received but not received, and the sending order of the target data unit is before that of the received data unit(s) in the first traffic flow.

66. The communication device according to claim 65, wherein the second information is used to indicate one or more of following out-of-order delivery parameters:
an allowed maximum size of one hole;
a maximum number of holes allowed in the first period;
a minimum interval allowed between two adjacent holes;
a maximum interval allowed between two adjacent holes; or
an allowed maximum target time interval, the target time interval being a time interval between a moment at which the hole is generated and a moment at which the target data unit is expected to be received.

67. The communication device according to any one of claims 64 to 66, wherein the first frame further comprises fifth information, and the fifth information is used to indicate in-order or out-of-order processing method of the data units in the first traffic flow.

68. The communication device according to claim 67, wherein the fifth information is used to indicate one or more of following:
the data units in the first traffic flow are processed as data units of a same type;
the data units in the first traffic flow correspond to a same serial number (SN) sequence, a same SN space, or a same SN counter;
the data units in the first traffic flow correspond to a same packet number (PN) sequence, a same PN space or a same PN counter;
the data units in the first traffic flow are processed according to multiple types of data units;
the data units in the first traffic flow correspond to multiple SN sequences, multiple SN spaces, or multiple SN counters; or
the data units in the first traffic flow correspond to multiple PN sequences, multiple PN spaces, or multiple PN counters.

69. The communication device according to claim 68, wherein the multiple types of data units satisfy one or more of following:
corresponding to different latency requirements;
corresponding to different stream classification TCLAS elements; or
corresponding to different data unit tags.

70. The communication device according to any one of claims 64 to 69, wherein the first frame further comprises sixth information, and the sixth information is used to indicate whether it is allowed to perform out-of-order delivery for the data units of a same type in the first traffic flow.

71. The communication device according to any one of claims 64 to 70, wherein the first frame comprises a first QoS characteristic field, and the first QoS characteristic field comprises one or more of the first information, the second information, or the third information.

72. The communication device according to claim 71, wherein the first frame comprises a stream classification service (SCS) descriptor element field, and the first QoS characteristic element field is located in the SCS descriptor element field.

73. The communication device according to claim 71 or 72, wherein the first QoS characteristic element field comprises a control information field, the first information and/or the third information are carried in the control information field, and the second information is carried in field(s) other than the control information field in the first QoS characteristic element field.

74. The communication device according to any one of claims 64-73, wherein when the first service flow is a service flow that allows out-of-order delivery, one or more of following are satisfied:
the first TID is a TID that allows or does not allow out-of-order delivery; or
the first user priority is a user priority that allows or does not allow out-of-order delivery.

75. The communication device according to any one of claims 64-74, wherein when the first service flow is a service flow that does not allow out-of-order delivery, one or more of following are satisfied:
the first TID is a TID that does not allow out-of-order delivery; or
the first user priority is a user priority that does not allow out-of-order delivery.

76. The communication device according to any one of claims 64-75, wherein the first frame is a first request frame, and the communication device further comprises:
a second communication module, configured to send a first response frame to the first device, wherein the first response frame comprises seventh information, and the seventh information is used to indicate one or more of following:
the second device does not support the out-of-order delivery; or
the second device rejects a request corresponding to the first request frame, and the seventh information indicates a modification proposal of the out-of-order delivery parameter(s).

77. The communication device according to claim 76, further comprising:
a third communication module, configured to receive a second request frame sent by the first device, wherein the second request frame includes out-of-order transmission parameters modified based on the modification proposal.

78. The communication device according to claim 76, further comprising:
a fourth communication module, configured to negotiate in-order or out-of-order delivery with the first device, and receive a second request frame sent by the first device after the negotiation is successfully completed, wherein the second request frame comprises the negotiated out-of-order delivery parameter(s).

79. The communication device according to any one of claims 64-78, wherein the first frame is a first request frame, and the communication device further comprises:
a fifth communication module, configured to send a first response frame to the first device, and transmit the first traffic flow according to whether it is allowed to perform out-of-order delivery and/or the out-of-order delivery parameter(s), wherein the first response frame comprises eighth information, and the eighth information is used to indicate that a request corresponding to the first request frame is successfully accepted.

80. The communication device according to claim 79, wherein in a case where a request corresponding to the first request frame is successfully accepted, if the first TID is a TID that allows out-of-order delivery or the first user priority is a user priority that allows out-of-order delivery, a transmission of the first traffic flow meets one or more requirements indicated by the out-of-order delivery parameter(s), or the first traffic flow needs to be transmitted based on one or more requirements indicated by the out-of-order delivery parameter(s), wherein the first request frame indicates that it is allowed to perform out-of-order delivery for data units of the first traffic flow.

81. The communication device according to claim 79 or 80, wherein in a case where the request corresponding to the first request frame is successfully accepted, if the data units in the first traffic flow correspond to a same SN space, a same SN sequence, a same PN space or a same PN sequence, the data units in the first traffic flow adopt PN-window-based replay detection, wherein the first request frame indicates that it is allowed to perform out-of-order delivery for the data units of the first traffic flow.

82. The communication device according to claim 79 or 80, wherein, in a case where the request corresponding to the first request frame is successfully accepted, if the data units in the first traffic flow correspond to different SN spaces, different SN sequences, different PN spaces, or different PN sequences, the data units in the first traffic flow adopt PN-window-based replay detection, or the data units in the first traffic flow adopt non-PN-window-based replay detection, wherein the first request frame indicates that it is allowed to perform out-of-order delivery for the data units of the first traffic flow.

83. The communication device according to any one of claims 79-82, wherein the first frame is an SCS request frame, and the first response frame is an SCS response frame.

84. The communication device according to any one of claims 64 to 83, wherein
the first device is a non-access point station, and the second device is an access point; or,
the first device is a non-access point multi-link device, and the second device is an access point multi-link device.

85. A communication device, comprising a processor and a memory, wherein the memory is configured to store a computer program and the processor is configured to invoke the computer program stored in the memory to cause the communication device to perform the method of any one of claims 1 to 21 or of any one of claims 22 to 42.

86. An apparatus, comprising a processor for invoking a computer program from a memory to cause the apparatus to perform the method of any of claims 1 to 21 or of any one of claims 22 to 42.

87. A chip, comprising a processor for invoking a computer program from a memory to cause a device on which the chip is mounted to perform the method of any of claims 1 to 21 or of any one of claims 22 to 42.

88. A computer-readable storage medium, configured to store a computer program, wherein the computer program causes a computer to perform the method of any one of claims 1 to 21 or of any one of claims 22 to 42.

89. A computer program product comprising a computer program, wherein the computer program causes a computer to perform the method of any one of claims 1 to 21 or of any one of claims 22 to 42.

90. A computer program, wherein the computer program causes a computer to perform the method of any one of claims 1 to 21 or of any one of claims 22 to 42.
